# EUROPÄISCHE PATENTSCHRIFT

(11) **EP 4 030 886 B1**
(45) Veröffentlichungstag und Bekanntmachung des Hinweises auf die Patenterteilung: **19.11.2025**
(21) Anmeldenummer: 20780574.8
(22) Anmeldetag: 11.09.2020
(51) Int. Cl.: A01D 41/14

(54) **SCHNEIDWERK MIT HÖHENELASTISCH GELAGERTEN SCHNEIDELEMENTEN**
CUTTING MECHANISM WITH CUTTING ELEMENTS WHICH ARE MOUNTED IN A HEIGHT-ELASTIC MANNER
APPAREIL DE COUPE DOTÉ D'ÉLÉMENTS DE COUPE MONTÉS DE MANIÈRE ÉLASTIQUE EN HAUTEUR

(30) Priorität: 19.09.2019 DE 102019125282
(43) Veröffentlichungstag der Anmeldung: 27.07.2022
(73) Patentinhaber: Carl Geringhoff GmbH & Co. KG, 59227 Ahlen (DE)
(72) Erfinder: SUDHUES, Steffen, 59227 Ahlen (DE); WEBERMANN, Dirk, 48308 Senden (DE); STÜCKMANN, Raphael, 48317 Drensteinfurt (DE); SCHARMANN, Jochen, 48231 Warendorf (DE); POKRIEFKE, Michael, 27798 Hude (DE)
(74) Vertreter: Weeg, Thomas
(86) Internationale Anmeldenummer: PCT/EP2020/075481
(87) Internationale Veröffentlichungsnummer: WO 2021/052885

(56) Entgegenhaltungen:
- WO-A1-02/102138
- GB-A- 873 947
- US-A- 5 464 371
- US-A1- 2015 007 545

## Beschreibung

Die vorliegende Erfindung bezieht sich auf ein Schneidwerk zum Anbau an eine Erntemaschine mit einem Rahmenteil, das mit einem Anbaurahmen verbunden ist, der Verbindungsmittel zum Anbau an einen Einzugskanal einer Erntemaschine aufweist, wobei das Rahmenteil in Arbeitsrichtung weisende Schwingen aufweist, an deren vorderen Enden Schneidelemente zum Schneiden des Ernteguts befestigt sind, einer um eine Achse in einem Drehlager drehbeweglichen Lagerung des Rahmenteils im Anbaurahmen, und einem mit dem Rahmenteil verbundenen motorischen Verstellantrieb zur Verstellung des Schnittwinkels der Schneidelemente, bei dessen Betätigung sich der Anstellwinkel der Schneidelemente zum Boden verändert.

Als Erntemaschinen kommen beispielsweise Mähdrescher in Betracht. Bei den Schneidwerken kann es sich um ein- oder mehrteile Getreideschneidwerke handeln, die gelenkig miteinander verbunden sein können und die das Erntegut mittels Förderschnecken oder Förderbändern abfördern.

Häufig sind für die Erntearbeit vorgesehene Getreideschneidwerke mit starren Rahmen versehen, an deren vorderen Enden ein Messerbalken mit einer Anzahl nebeneinander angeordneten Messerklingen als ein Beispiel für Schneidelemente fest verbaut sind, die mit oszillierenden Messerbewegungen das am Messerbalken anstehende Erntegut von den auf dem Feld verbleibenden Stoppeln abschneiden, so dass es auf das Schneidwerk fallen und von dort über den Einzugskanal zu weiteren Verarbeitung an die Erntemaschine oder zur Schwadlegung abgefördert werden kann. Mit solchen starren Rahmen und starr verbauten Messerbalken mit den damit verbundenen Messerklingen ist es allerdings insbesondere bei unebenen Bodenverhältnissen schwierig, Erntegut bodennah abzuschneiden und aufzunehmen, wenn das Erntegut dicht am Boden liegt oder dicht am Boden geschnitten werden soll. Das gilt insbesondere auch bei mehrteiligen Erntevorsätzen mit größeren Arbeitsbreiten von mehr als 6 m.

Eine Schnittwinkelverstellung für die Schneidelemente ist vorteilhaft, um den Schnitt und die Übergabe des geschnittenen Ernteguts an die Förderorgane des Schneidwerks besser an das jeweilige Erntegut und die bei der Ernte vorherrschenden Erntebedingungen anpassen zu können.

Zwar sind Bodenkopiersteuerungen bekannt, mit denen die Schneidwerke dicht an Boden geführt werden sollen. Diese reagieren aber häufig zu träge, um auch in schwierigen Bedingungen wie unebenen Bodenverhältnissen und Lagergetreide oder bodennah wachsendem Erntegut wie beispielsweise Soja sich den Bodenverhältnissen laufend genau anzupassen und dadurch möglichst verlustfrei das gesamte Erntegut zu erfassen und abzufördern. Die Bodenkopiersteuerungen sind häufig auch nur darauf ausgelegt, ein Schneidwerk insgesamt in seiner Höhenlage und/oder Schwenkstellung anzupassen. Eine Höhenanpassung eines Segments eines Schneidwerks ist von der Erntemaschine aus üblicherweise nicht möglich.

Bei Getreideschneidwerken besteht das generelle Problem, dass diese an langen Einzugskanälen gehalten sind, deren Schwenkwinkellagen über Hydraulikzylinder verstellt werden, die über ihre Länge hinweg vergleichsweise lange Verstellwege durchlaufen müssen, um den Einzugskanal nur um wenige Winkelgrade nach oben oder unten zu verstellen. Um Beschädigungen durch Boden- oder Steinkontakte zu vermeiden, werden die Schneidwerke von den Fahrern der Erntemaschinen häufig unter Inkaufnahme von Erntegutverlusten zu hoch eingestellt und bei der Erntearbeit geführt.

Aus der Schrift US 5,464,371 A ist es bekannt, ein Blattfederpaket zur Abstützung des an einer Schwinge gehaltenen Messerbalkens einzusetzen, damit sich das Schneidwerk flexibler den Bodenverhältnissen anpassen kann. Das Blattfederpaket lässt aber nur eine begrenzte Verschwenkung der starren Schwinge zu. Durch die Montage des Blattfederpakets unterhalb der Schwinge ist die Bodenfreiheit des Schneidwerks verringert.

Aus der Schrift WO 2002/102138 A1 ist es bekannt, ein Parallelogrammgestänge zu verwenden, um einem Schneidwerk die Möglichkeit zu geben, sich besser an den Boden anzupassen. Das Parallelogrammgestänge ist allerdings kostenaufwendig und benötigt viele bewegliche Baugruppen, die zum Teil in Bodennähe einem erhöhten Verschleiß wegen intensiver Verschmutzung ausgesetzt sind.

Es ist die Aufgabe der vorliegenden Erfindung, die Schneidelemente höhenelastisch zu lagern, um den Messerbalken möglichst bodennah führen zu können und dabei das Beschädigungsrisiko bei einem Bodenkontakt zu verringern.

Die Aufgabe wird gelöst, indem der Verstellantrieb mit einer ersten Seite eines um eine Achse drehbeweglichen Kipphebels drehbeweglich verbunden ist, an dessen zweiter Seite ein längenveränderlicher Kraftspeicher drehbeweglich angreift, und das Rahmenteil mit den Schwingen gegen die Kraft des längenveränderlichen Kraftspeichers über eine Kippbewegung des Kipphebels um die quer zur Arbeitsrichtung des Schneidwerks verlaufende Achse beweglich ist, wenn eine Anhebekraft auf zumindest eine Schwinge einwirkt.

Erfindungsgemäß wird also die Vorrichtung zur Einstellung des Schnittwinkels eines Schneidwerks dazu genutzt, den an der Frontseite des Schneidwerks angeordneten Schneidelementen, wie beispielsweise einem Messerbalken, eine Ausweichbewegung nach oben zu ermöglichen, wenn dieser einen Bodenkontakt hat. Die Vorrichtung zur Schnittwinkelverstellung dient also nicht nur der Einstellung des Schnittwinkels, durch ihre Flexibilisierung wird sie auch zu einem Bestandteil der Bodenkopierung des Schneidwerks, insbesondere auch für die Feinanpassung der Schneidelemente an Veränderungen in der Bodenkontur.

Es können dabei verschiedenste Schneidelemente an einem Schneidwerk angeordnet sein, wie ein Messerbalken mit oszillierend angetriebenen Klingen, rotierend angetriebene, nebeneinander oder in Arbeitsrichtung des Schneidwerks versetzt zueinander angeordnete Schneidscheiben, umlaufend abgetriebene Messerklingen oder dergleichen. Nachfolgend wird die Erfindung aus Vereinfachungsgründen anhand des Ausführungsbeispiels eines Messerbalkens näher beschrieben, ohne dass die Erfindung bei den Schneidelementen aber darauf beschränkt wäre.

Die Ausweichbewegung wird ermöglicht, indem zwischen die Vorrichtung zur Einstellung des Schnittwinkels und das Rahmenteil ein längenveränderlicher Kraftspeicher zwischengeschaltet ist, der über eine Längenveränderung eine Ausweichbewegung ermöglicht. Die Längenveränderung wird vom Rahmenteil über einen Kipphebel übertragen, an dem an einem ersten Ende der längenveränderliche Kraftspeicher und an dessen zweitem Ende die Vorrichtung zur Einstellung des Schnittwinkels angreift. Die Bewegungsreserve für eine Ausweichbewegung wird also nicht über eine Beweglichkeit der Vorrichtung zur Einstellung des Schnittwinkels selbst gelöst, sondern über den längenveränderlichen Kraftspeicher, der über den Kipphebel mit der Vorrichtung zur Einstellung des Schnittwinkels verbunden ist.

Die erfindungsgemäße Lösung bietet einige technische Vorteile. Die Vorrichtung zur Einstellung eines Schnittwinkels kann zu einem Zeitpunkt auf einen gewünschten Schnittwinkel eingestellt werden. Der vorgewählte Schnittwinkel bleibt dann grundsätzlich erhalten, wenn die Erntemaschine über ein Feld fährt. Da der Höhenausgleich für den Messerbalken bei einem Bodenkontakt über den längenveränderlichen Kraftspeicher erfolgt, muss der Schnittwinkel nicht über die Vorrichtung zur Einstellung des Schnittwinkels laufend verstellt werden. Es bleibt bei einer Grundeinstellung, bei der ständige geringfügige Bodenanpassungen vom längenveränderlichen Kraftspeicher geschluckt werden. Die Funktionsteilung zwischen der Grundeinstellung des Schnittwinkels des Rahmenteils über die entsprechende Vorrichtung und der Aufnahme von Ausweichbewegungen und deren Rückführung über den längenveränderlichen Kraftspeicher ermöglicht es, die jeweiligen Bauteile auf ihren jeweiligen Zweck hin zu optimieren. So kann die Vorrichtung zur Einstellung des Schnittwinkels auf die Bewegung großer Kräfte, aber mit vergleichsweise langsamen Bewegungen und einem vergleichsweise trägen Bewegungsverhalten ausgelegt sein, während der längenveränderliche Kraftspeicher darauf ausgelegt sein kann, schon auf vergleichsweise geringe Kräfte schnell zu reagieren. Steigt der Bodendruck auf den Messerbalken durch einen Bodenkontakt an, kann dieser sehr schnell, feinfühlig und flexibel nach oben hin gegen den längenveränderlichen Kraftspeicher ausweichen. Dabei baut sich im längenveränderlichen Kraftspeicher eine Rückstellkraft auf. Fällt der Bodendruck wieder ab, wird der Messerbalken von der im längenveränderlichen Kraftspeicher bei der Ausweichbewegung aufgebauten Rückstellkraft wieder sehr schnell und leicht nach unten in die Normallage zurückbewegt.

Wesentlich für die flexiblere Anpassung an Bodenunebenheiten ist der Aspekt, dass die Länge des Hebelarms, der bewegt werden muss, um eine Höhenanpassung des Messerbalkens vorzunehmen, bei dem Abstand des Messerbalkens vom Drehpunkt des Rahmenteils in dem Drehlager viel kürzer ist als der Abstand des Messerbalkens von der Drehachse des Einzugskanals. Beim kürzeren Hebelarm genügen deshalb viel kleinere Verstellwege, um gleiche Veränderungen in der Höhenlage des Messerbalkens herbeizuführen. Die kürzeren Verstellwege ermöglichen viel schnellere Anpassungen der Höhenlage des Messerbalkens. Dabei wird auch weniger Gewicht mit einer verringerten Massenträgheit bewegt. So genügt dann ein Kipphebel, um die kurzen Verstellwege auf den längenveränderlichen Kraftspeicher zu übertragen.

Die Funktionsteilung zwischen der Vorrichtung zur Einstellung eines Schnittwinkels und dem längenveränderlichen Kraftspeicher ermöglicht zudem eine besondere Schneidwerksführung bei der Vorfahrt der Erntemaschine in ein Feld. Da das Schneidwerk mit einem Einzugskanal der Erntemaschine verbunden ist und über die Höheneinstellung des Einzugskanals - gegebenenfalls noch über zusätzliche Stellzylinder am Einzugskanal - in einer Arbeitshöhe gehalten wird, kann das Schneidwerk mit dem Einzugskanal - und den dort gegebenenfalls zusätzlich vorhandenen Stellzylindern - unter Einhaltung eines vorgewählten Schnittwinkels auf den Boden abgesenkt werden, bis der Messerbalken einen Bodenkontakt hat. Dabei kann der Einzugskanal sogar so weit nach unten abgesenkt werden, dass der längenveränderliche Kraftspeicher anspricht und durch eine beginnende Kippbewegung des Rahmenteils eine Rückstellkraft aufbaut. In dieser Absenkstellung wird der Messerbalken dann von der dabei aufgebauten Rückstellkraft des längenveränderlichen Kraftspeichers auf den Boden gedrückt gehalten. Es drückt aber nicht das Gewicht des gesamten Schneidwerks, sondern nur der längenveränderliche Kraftspeicher mit der darin aufgebauten Rückstellkraft. Schon diese vergleichsweise geringe Rückstellkraft reicht für eine besonders ausgeprägte Bodenkopierung der Oberflächenform des bearbeiteten Feldes mit dem Messerbalken aus, wenn die Erntemaschine mit dem auf diese Weise bodennah gehaltenen Schneidwerk in das zu bearbeitende Feld fährt. Der Messerbalken kann vom Fahrer aber gleichwohl in dieser dichten Anlage am Boden gefahren werden, ohne Beschädigungen am Messerbalken befürchten zu müssen, weil der längenveränderliche Kraftspeicher noch immer Ausweichreserven bietet, wenn er in der eingestellten Grundstellung noch nicht an seinen Anschlag gefahren worden ist und ein dafür ausreichendes Verstellwegpotential bietet.

Kleinere Höhenveränderungen in der Bodenkontur können auf diese Weise vom längenveränderlichen Kraftspeicher weggefedert werden, ohne dass dafür die eher träge und schwerfällige Höhenführung des Schneidwerks über eine Verstellung des Einzugskanals - und gegebenenfalls der daran angeordneten zusätzlichen Stellzylinder - aktiviert werden müsste. Diese Regelorgane werden erst dann benötigt, wenn in der Bodenoberfläche größere Unebenheiten auftreten, für deren Ausgleich der Verstellweg des längenveränderlichen Kraftspeichers nicht mehr ausreicht.

Die sensible Höhenführung des Messerbalkens gegen den längenveränderlichen Kraftspeicher verringert den Verschleiß im Messerbalken, der sich darunter befindlichen Gleitkufen und im Rahmenteil, weil darauf weniger Kraftspitzen einwirken. Auch der Verschleiß in den übrigen Verstellvorrichtungen für die Höhenführung des Schneidwerks über den Einzugskanal wird verringert, weil diese im laufenden Erntebetrieb viel weniger auf Veränderungen in der Höhenlage des Schneidwerks reagieren müssen.

Die Funktionsteilung zwischen der Vorrichtung zur Einstellung eines Schnittwinkels und dem längenveränderlichen Kraftspeicher ermöglicht es zudem, den Messerbalken besonders feinfühlig auf einen gewünschten Wert für den Anpressdruck einzustellen, mit dem der Messerbalken auf den Boden gedrückt gehalten ist. Dazu wird das Rahmenteil zunächst mit der Vorrichtung zur Einstellung eines Schnittwinkels auf einen Schnittwinkel eingestellt, bei dem noch Reserven vorhanden sind, um das Rahmenteil mit dem Messerbalken später noch weiter nach unten in Richtung des Bodens verschwenken zu können. Sodann wird das Schneidwerk mit dem Einzugskanal - und/oder den am Einzugskanal gegebenenfalls zusätzlich vorhandenen Stellzylindern - so weit auf den Boden abgesenkt, dass der Messerbalken auf dem Boden aufliegt und der längenveränderliche Kraftspeicher anspricht. Wenn in dieser Schwenkstellung nun die Vorrichtung zur Einstellung eines Schnittwinkels in eine Richtung betätigt wird, in der das Rahmenteil mit dem Messerbalken noch weiter nach unten bewegt würde, wenn es nicht auf dem Boden aufläge, wird diese Verstellbewegung über den Kipphebel auf den längenveränderlichen Kraftspeicher übertragen, in dem sich durch die Einfahrbewegung die Rückstellkräfte vermindern. Auf diese Weise wird die Vorspannung des längenveränderlichen Kraftspeichers auf einen niedrigeren Wert eingestellt. Der Anpressdruck, mit dem der Messerbalken auf dem Boden gehalten ist, kann also durch die Betätigung der Vorrichtung zur Einstellung eines Schnittwinkels auf einen gewünschten Wert feineingestellt werden. Auch hierbei verbleiben bei entsprechender Auslegung des längenveränderlichen Kraftspeichers noch Federwegreserven, die bei der Erntearbeit noch Ausweichbewegungen des Messerbalkens - bei einem dann erhöhten Auflagedruck - zulassen, so dass das Beschädigungsrisiko des Messerbalkens weiterhin gering bleibt.

Ein Vorteil der Erfindung ist darin zu sehen, dass das Rahmenteil, dessen Schnittwinkel gegen den längenveränderlichen Kraftspeicher beweglich ausgestaltet ist, nur die Schneidelemente des Schneidwerks tragen kann, die sich über einen Teil der Arbeitsbreite des Schneidwerks erstrecken. Die erfindungsgemäße Ausweichbewegung eines Messerbalkens gegen einen über einen Kipphebel verbundenen längenveränderlichen Kraftspeicher ist somit auch nur über Teilarbeitsbreiten des Schneidwerks und unabhängig von Höhenanpassungen seitens der Erntemaschine für das Schneidwerk insgesamt darstellbar, oder es werden über die Arbeitsbreite eines Schneidwerks verteilt mehrere Rahmenteile verwendet, die jeweils eine erfindungsgemäße Bodenanpassung mit einer kipphebelgestützten Abstützung auf einem längenveränderlichen Kraftspeicher ermöglichen. Eine Bodenanpassung erfolgt dann jeweils nur in dem Abschnitt der Arbeitsbreite des Schneidwerks, in dem eine Höhenanpassung erforderlich ist. Dabei werden dann geringere Gewichte bewegt als bei einer Höhenanpassung über die gesamte Arbeitsbreite des Schneidwerks, wodurch die Bodenanpassung nochmals flexibler und leichter möglich ist.

Die Achse, um die der Kipphebel schwenkbeweglich ist, ist quer zur Arbeitsrichtung des Schneidwerks ausgerichtet. Genauso können auch die Achsen, mit denen der motorische Antrieb der Vorrichtung zur Verstellung des Schnittwinkels und/oder der längenveränderliche Kraftspeicher mit dem Kipphebel verbunden sind, quer zur Arbeitsrichtung des Schneidwerks ausgerichtet sein. Durch die Querausrichtung dieser Achsen ergibt sich eine Beweglichkeit der betreffenden Maschinenelemente, ohne dass bei Bewegungen irgendwelche störenden Querkräfte auftreten.

Bei den Schwingen handelt es sich um Längsträger, die beispielsweise über ihre volle oder teilweise Länge als Guss- oder Blechprofile und/oder als Leisten aus einem Flachmaterial ausgebildet sein können.

Der Kipphebel ist bevorzugt ortsfest, aber drehbeweglich um eine Schwenkachse mit dem Rahmenteil verbunden. Durch seine ortsfeste Lage im Rahmenteil führt der Kipphebel Kippbewegungen aus, wenn sich wegen einer bodendruckbedingten Veränderung der Schwenklage des Rahmenteils die räumliche Lage des Anbindungspunktes des Kipphebels am Rahmenteil im Verhältnis zum ortsfest bleibenden Anbindungspunkt des motorischen Verstellantriebs der Vorrichtung zur Verstellung des Schnittwinkels am Kipphebel verändert. Durch die Kippbewegung des Kipphebels verändert sich zwangsläufig auch die räumliche Lage des Anbindungspunktes des längenveränderlichen Kraftspeichers am Kipphebel, durch die der längenveränderliche Kraftspeicher gegen den Aufbau einer Rückstellkraft auseinandergezogen oder durch den Abbau einer Rückstellkraft wieder zusammengezogen wird. Der Kipphebel verfügt also über drei Anbindungspunkte, wobei nach einem Ausführungsbeispiel der Anbindungspunkt des Kipphebels am Rahmenteil im mittleren Bereich des Kipphebels und die Anbindungspunkte der Verstellvorrichtung und des längenveränderlichen Kraftspeichers an gegenüberliegenden Enden des Kipphebels angeordnet sind.

Nach einer Ausgestaltung der Erfindung ist der längenveränderliche Kraftspeicher aus einer oder mehreren Federn gebildet. Mechanische Federn sind kostengünstig, wartungsfrei, immer betriebsbereit und können in ihrer Federkennlinie genau auf den Anwendungsfall hin ausgelegt werden. Es können auch hydraulische oder pneumatische Federn verwendet werden, die in ihrem Federverhalten dem Verhalten einer mechanischen Feder nahe kommen.

Nach einer Ausgestaltung der Erfindung ist an dem Schneidwerk ein Sensor angeordnet, der die aktuelle Länge des längenveränderlichen Kraftspeichers oder die Schwenklage des Kipphebels erfasst, der Sensor ist mit einer Auswerteelektronik verbunden, an die er ein der Länge oder der Schwenklage entsprechendes Sensorsignal übermittelt, und die Auswerteelektronik weist ein Programm auf, das mit einer entsprechenden Programmierung ein Warnsignal generiert, wenn sich das Sensorsignal im Bereich eines oberen oder unteren Grenzwertes befindet. Über den Sensor ist eine Überwachung möglich, ob sich die Bewegungen des längenveränderlichen Kraftspeichers einem Grenzwert annähern. Das Warnsignal kann akustisch, optisch und/oder im Rahmen einer Anzeigevorrichtung ausgegeben werden. Meldet sich der Sensor häufiger, kann der Fahrer der Erntemaschine die Höhenlage des Schneidwerks und/oder den Schnittwinkel des Rahmenteils so verstellen, dass sich die Bewegungen des längenveränderlichen Kraftspeichers weniger oft im Grenzbereich befinden.

Nach einer Ausgestaltung der Erfindung ist an dem Schneidwerk ein Sensor angeordnet, der die aktuelle Länge des längenveränderlichen Kraftspeichers oder die Schwenklage des Kipphebels erfasst, der Sensor ist mit einer Auswerteelektronik verbunden, an die er ein der Länge oder der Schwenklage entsprechendes Sensorsignal übermittelt, die Auswerteelektronik weist ein Programm auf, das mit einer entsprechenden Programmierung das Sensorsignal mit einem Sollwert vergleicht, mit dem motorischen Verstellantrieb verbunden ist und einen Stellbefehl an den Verstellantrieb ausgibt, wenn das Sensorsignal um ein vorgegebenes Maß von dem Sollwert abweicht, wobei der Stellbefehl den Verstellantrieb in eine Richtung bewegt, mit dem durch eine Kippbewegung des Kipphebels die Vorspannung des längenveränderlichen Kraftspeichers erhöht oder abgesenkt wird, und/oder die Auswerteelektronik weist ein Programm auf, das mit einer entsprechenden Programmierung das Sensorsignal mit einem Sollwert vergleicht, mit dem motorischen Verstellantrieb verbunden ist und einen Stellbefehl an den Verstellantrieb ausgibt, wenn das Sensorsignal um ein vorgegebenes Maß von dem Sollwert abweicht, wobei der Stellbefehl den Verstellantrieb in eine Richtung bewegt, durch die sich die Differenz zwischen dem Sensorsignal und dem Sollwert verringert. Mit dieser Ausgestaltung ist eine automatisierte Anpassung des Schnittwinkels an die aktuellen Erfordernisse des Erntebetriebs und der Bodenkontur möglich. Das Programm kann mit einer entsprechenden Programmierung an bestimmte Bodenarten und -zustände sowie Fahrgeschwindigkeiten angepasst sein. Mit dem Sensorsignal sind die Auflagekräfte steuerbar.

Nach einer Ausgestaltung der Erfindung weist der längenveränderliche Kraftspeicher einen oder mehrere kraftabhängig gesteuerte Antriebe auf, ein Kraftsensor erfasst die auf das Rahmenteil und/oder den längenveränderlichen Kraftspeicher einwirkende Kraft und der Kraftsensor übermittelt ein entsprechendes Kraftsensorsignal an die mit dem Kraftsensor verbundene Auswerteelektronik, wobei die Auswerteelektronik ein Programm aufweist, das mit einer entsprechenden Programmierung das Kraftsensorsignal mit einem Sollwert vergleicht, mit dem motorischen Verstellantrieb verbunden ist und einen Stellbefehl an den Verstellantrieb ausgibt, wenn das Kraftsensorsignal um ein vorgegebenes Maß von dem Sollwert abweicht, wobei der Stellbefehl den Verstellantrieb in eine Richtung bewegt, mit dem durch eine Kippbewegung des Kipphebels die Vorspannung des längenveränderlichen Kraftspeichers erhöht oder abgesenkt wird, und/oder die Auswerteelektronik weist ein Programm auf, das mit einer entsprechenden Programmierung das Kraftsensorsignal mit einem Sollwert vergleicht, ist mit dem motorischen Verstellantrieb verbunden und gibt einen Stellbefehl an den Verstellantrieb aus, wenn das Kraftsensorsignal um ein vorgegebenes Maß von dem Sollwert abweicht, wobei der Stellbefehl den Verstellantrieb in eine Richtung bewegt, durch die sich die Differenz zwischen dem Kraftsensorsignal und dem Sollwert verringert. Die Ausgestaltung der Erfindung ist auf einen längenveränderlichen Kraftspeicher gerichtet, der die Längenveränderung mit einem motorisch angetriebenen Maschinenelement, wie beispielsweise einem über ein druckgesteuertes Hydrauliksystem abgestützten Hydraulikzylinder oder einem druckgesteuerten pneumatischen Zylinder oder einem Elektromotor realisiert. Die Kraftspeicherfunktion kann dabei auch motorisch dargestellt werden, indem der jeweilige Antrieb mit einer Gegenkraft beaufschlagt wird, die beispielsweise einer Kraft entspricht, die bei einem entsprechenden Verstellweg in einer mechanischen Feder aufgebaut worden wäre. Über die Auswerteelektronik ist auch hier eine automatisierte Anpassung des Schnittwinkels an die aktuellen Erfordernisse des Erntebetriebs und der Bodenkontur möglich. Das Programm kann mit einer entsprechenden Programmierung an bestimmte Bodenarten und -zustände sowie Fahrgeschwindigkeiten angepasst sein, das deren übliche Auflagekräfte berücksichtigt.

Nach einer Ausgestaltung der Erfindung weist das Schneidwerk eine verstellbare angetriebene Förderhilfe auf, deren aktuelle Position von einem Positionssensor überwacht ist, der mit der Auswerteelektronik verbunden ist und der den Positionssensorwert an die Auswerteelektronik übermittelt, und die Auswerteelektronik weist ein Programm auf, das mit einer entsprechenden Programmierung einen Stellbefehl an den Verstellantrieb zur Verstellung des Schnittwinkels und/oder der Höhensteuerung des Einzugskanals in Abhängigkeit von dem Positionssensorwert zur aktuellen Position der Förderhilfe bestimmt. Als Förderhilfe kommt beispielsweise eine Haspel in Betracht, deren Einfluss aus ihrer Gewichtskraft auf die Schneidwerksauflagekraft in Abhängigkeit von ihrer Position gemäß dieser Ausgestaltung der Erfindung kompensiert wird.

Nach einer Ausgestaltung der Erfindung ist die Auswerteelektronik mit einem Geschwindigkeitssensor verbunden und die Auswerteelektronik weist ein Programm auf, das mit einer entsprechenden Programmierung den Stellbefehl in Abhängigkeit von dem vom Geschwindigkeitssensor übermittelten Geschwindigkeitssensorsignal bestimmt. Je nach Vorfahrtgeschwindigkeit der Erntemaschine können die von der Auswerteelektronik bei Regelungsautomatiken berücksichtigten Parameter zur Be-stimmung des Wertes für einen Stellbefehl unterschiedlich groß ausfallen. Je nach gefahrener Geschwindigkeit kann die Verstellung des Schnittwinkels schneller oder langsamer erfolgen.

Nach einer Ausgestaltung der Erfindung weist die Auswerteelektronik ein Programm auf, das mit einer entsprechenden Programmierung bei der Auswertung des Sensorsignals oder des Kraftsensorsignals eine Überschreitung eines Grenzwertes über ein Zeitintervall hinweg feststellt und ein Stellsignal an eine Höhensteuerung des Einzugskanals der Erntemaschine generiert, auf das die Höhensteuerung den Einzugskanal anhebt oder absenkt. Bei dieser Ausgestaltung der Erfindung nimmt die Auswerteelektronik automatische Anpassungen in der Regelung der Höhenlage des Einzugskanals der Erntemaschine vor. Eine solche Anpassung erscheint insbesondere sinnvoll, wenn anhand der Sensordaten erkennbar ist, dass die über die Schwenkstellung des Einzugskanals vorgegebene Höhenlage des Schneidwerks zu hoch oder zu tief ist. Die Höhenlage des Einzugskanals kann dann entsprechend korrigiert werden.

Nach einer Ausgestaltung der Erfindung sind auf gegenüberliegenden Seiten des Einzugskanals Verstellantriebe vorhanden, die jeweils mit einer ersten Seite eines jeweiligen um eine Achse drehbeweglichen Kipphebels drehbeweglich verbunden sind, an dessen zweiter Seite greift jeweils ein längenveränderlicher Kraftspeicher drehbeweglich an, und das Rahmenteil ist mit den Schwingen gegen die Kraft des oder der Kraftspeicher über eine Kippbewegung des jeweiligen Kipphebels um die Achse beweglich, wenn eine Anhebekraft auf zumindest eine Schwinge einwirkt, wobei das Rahmenteil auch auf gegenüberliegenden Seiten des Einzugskanals mit jeweils einem längenveränderlichen Kraftspeicher abgestützt ist. Die doppelte Abstützung des Rahmenteils auf gegenüberliegenden Seiten des Einzugskanals eröffnet die Möglichkeit, dass sich nur eine Seite des Rahmenteils anhebt, wenn der Messerbalken auf dieser Seite des Rahmenteils einen Bodenkontakt bekommt, die andere Seite aber nicht. Bei einer unebenen Bodenkontur, die nicht parallel zur Ruhelage des Messerbalkens verläuft, kann sich der Messerbalken über die Arbeitsbreite des Rahmenteils gesehen in den jeweiligen Teilarbeitsbreiten besser an die Bodenkontur anpassen. Gleichwohl kann das Rahmenteil aber auch insgesamt nach hinten schwenken, wenn auf beiden Seiten der Messerbalken durch einen Bodenkontakt nach oben gedrückt wird.

Nach einer Ausgestaltung der Erfindung weist die Auswerteelektronik ein Programm auf, mit dem mit einer entsprechenden Programmierung die auf beiden Seiten eines Einzugskanals angeordneten Verstellantriebe unabhängig voneinander mit Stellbefehlen beweglich sind, wie sie vorstehend bereits als eine jeweilige Ausgestaltung der Erfindung beschrieben sind. So können die Schnittwinkel, auf die die zugehörigen Seiten des Rahmenteils eingestellt sind, voneinander abweichen. So kann beispielsweise der Schnittwinkel eines Rahmenteils steiler gestellt werden, wenn sich dort der Auflagedruck des Messerbalkens verringert und/oder der Abstand des Messerbalkens zum Boden vergrößert, oder der Schnittwinkel wird verkleinert, wenn der Bodendruck auf den Messerbalken ansteigt. Es ist auch möglich, den Schnittwinkel nur auf einer Seite des Rahmenteils zu vergrößern oder zu verkleinern, um dort den Messerbalken bodennah zu halten, ohne dass dort durch einen zu großen Auflagedruck Beschädigungen oder durch einen zu großen Abstand des Messerbalkens vom Boden Erntegutverluste drohen. Die Schnittwinkel der verschiedenen Teilarbeitsbreiten des Rahmenteils können von der Auswerteelektronik bei der Vorfahrt der Erntemaschine automatisch laufend an die jeweiligen Bodenverhältnisse angepasst werden.

Nach einer Ausgestaltung der Erfindung weist die Auswerteelektronik ein Programm auf, das mit einer entsprechenden Programmierung bei der Auswertung der Sensorsignale oder der Kraftsensorsignale eine Überschreitung eines Grenzwertes über ein Zeitintervall hinweg auf einer oder beiden Seiten des Einzugskanals feststellt und bei einer Überschreitung eines Grenzwertes über ein Zeitintervall hinweg auf einer Seite des Einzugskanals oder bei einer Differenz zwischen den Werten der Sensorsignale oder der Kraftsensorsignale auf gegenüberliegenden Seiten des Einzugskanals, die über ein Zeitintervall hinweg einen Schwellwert überschreitet, ein Stellsignal generiert und dieses an eine mit der Auswerteelektronik verbundene Verschwenksteuerung zur Verschwenkung des Schneidwerks um die in Arbeitsrichtung weisende Längsachse der Erntemaschine übermittelt, auf das die Verschwenksteuerung das Schneidwerk über die Betätigung eines Verschwenkantriebs in eine Richtung um die Längsachse dreht. Zeigt die Beobachtung der Sensorwerte über ein Zeitintervall an, dass die eine Seite des Rahmenteils einen zu großen Auflagedruck und die andere Seite des Rahmenteils einen zu geringen Auflagedruck aufweist, so spricht das dafür, das Schneidwerk um die in Arbeitsrichtung weisende Längsachse zu drehen, um dadurch das Schneidwerk wieder möglichst parallel zur Bodenkontur zu halten. Durch eine solche Korrektur der Schwenklage des Schneidwerks insgesamt stehen auf beiden Seiten des Einzugskanals wieder annähernd gleich große Verstellwege des Kipphebels in beide Richtungen bei annähernd gleichen Rückstellkräften aus den längenveränderlichen Kraftspeichern zur Verfügung.

Nach einer Ausgestaltung der Erfindung sind der oder die Kipphebel am oberen Ende oder oberhalb der Rückwand des Schneidwerks angeordnet und der oder die längenveränderlichen Kraftspeicher sind auf der Rückseite der Rückwand in einer genau oder zumindest überwiegend vertikalen Ausrichtung angeordnet. Bei dieser Anordnung kann die Bauhöhe der Rückwand als Bauraum für die Anordnung des längenveränderlichen Kraftspeichers genutzt werden, ohne dass dieser den Gutfluss des Ernteguts vom Messerbalken bis hin zum Einzugskanal der Erntemaschine behindert. Da der Schnittwinkel des Rahmenteils mit dem motorischen Verstellantrieb besonders gut einstellbar ist, wenn der motorische Verstellantrieb in einem größeren Abstand zur bodennah angeordneten Schwenkachse an dem Drehlager angreift, und der motorische Verstellantrieb aus diesem Grund am oberen Ende oder oberhalb der Rückwand des Schneidwerks angeordnet und mit dem Rahmenteil verbunden ist, ergibt sich für den Anbindungspunkt des Verstellantriebs zu dem ebenfalls am oberen Ende oder oberhalb der Rückwand des Schneidwerks befindlichen Kipphebel ein vergleichsweise kurzer Hebelweg zur Schwenkachse des Kipphebels im Rahmenteil, der nur einen geringen Bauraum beansprucht und den Gutfluss des Ernteguts nicht behindert. Der kurze Hebelweg zum Verstellantrieb kann mit einem ebenfalls kurzen Hebelarm des Kipphebels vom oberen Ende oder oberhalb der Rückwand des Schneidwerks her gut auf den hinter der Rückwand des Schneidwerks angeordneten längenveränderlichen Kraftspeicher übertragen werden. Dadurch ergibt sich eine insgesamt wenig Bauraum beanspruchende, den Gutfluss des Ernteguts nicht behindernde Anordnung der Komponenten zur Verstellung des Schwenkwinkels und der federnden Lagerung des Rahmenteils.

Nach einer Ausgestaltung der Erfindung sind die Schwingen starr ausgeführt und bilden mit dem Rahmenteil eine starre Baueinheit. Natürlich ist es möglich, die Schwingen so auszugestalten, dass diese über eine gesonderte Drehachse zum starren Rahmenteil und/oder eine gewisse Eigenelastizität bereits einen Höhenausgleich des an ihrem vorderen Ende befestigten Messerbalkens ermöglichen. Bei einer starren Gestaltung der Schwingen und des Rahmenteils als gemeinsam starre Baueinheit ergibt sich allerdings der Vorteil, dass die Förderorgane des Schneidwerks zwischen dem Messerbalken und dem Abgabeende zum Einzugskanal der Erntemaschine gleich bleibende geometrische Verhältnisse zum Messerbalken, zueinander und zum Abgabeende zum Förderkanal haben, so dass eine Höhenanpassung des Messerbalkens nur über den Kipphebel gegen den längenveränderlichen Kraftspeicher erfolgt. Die dabei auftretenden Verstellwege und Verstellkräfte sind messbar und veränderlich einstellbar, so dass es mit einem überschaubaren technischen Aufwand möglich ist, die auftretenden Verstellbewegungen gezielt so zu beeinflussen, dass sich eine optimale Bodenanpassung des Messerbalkens an eine sich kontinuierlich verändernde Oberflächenkontur des Bodens ergibt. Um erhöhte Kraftspitzen in den jeweiligen Bauteilen zu vermeiden, ist es allerdings vorteilhaft, ein gewisses Maß an Eigenelastizität der Schwingen durch ihre Bauform zuzulassen, bei der sich allerdings nur im Verhältnis zu den aus dem Kipphebel möglichen Verstellwegen geringfügige und vernachlässigbare Veränderungen der Höhenlage des Messerbalkens ergeben sollten, wenn die auftretenden Verstellbewegungen über den Kipphebel gezielt beeinflusst werden sollen.

Nach einer Ausgestaltung der Erfindung sind der Anbaurahmen und/oder das Rahmenteil an gegenüberliegenden Seiten mit Seitenrahmen schwenkbeweglich verbunden, an deren in Arbeitsrichtung weisender Längsseite sind ebenfalls Schneidelemente angeordnet, die Seitenrahmen sind jeweils über ein Rad auf dem Boden abgestützt und das jeweilige Rad ist an einem um eine Achse schwenkbeweglich mit dem Seitenrahmen verbundenen Längslenker befestigt, wobei ein jeweiliger Längslenker über einen motorischen Verstellantrieb in seiner Höhenlage verstellbar ist, der Verstellantrieb ist mit einer ersten Seite eines um eine Achse drehbeweglichen Kipphebels drehbeweglich verbunden, an dessen zweiter Seite greift ein längenveränderlicher Kraftspeicher drehbeweglich an, und der Längslenker ist gegen die Kraft des längenveränderlichen Kraftspeichers über eine Kippbewegung des Kipphebels beweglich. Bei dieser Ausgestaltung der Erfindung ist das Schneidwerk mehrteilig ausgeführt, wobei an den mittleren Anbaurahmen und/oder das Rahmenteil seitlich zusätzliche Seitenrahmen angebaut sind, die zusammen mit dem mittleren Rahmenteil die Gesamtarbeitsbreite des Schneidwerks definieren. Um eine Bodenanpassung des Schneidwerks über die gesamte Arbeitsbreite des Schneidwerks zu ermöglichen, sind die Seitenrahmen schwenkbeweglich mit dem Anbaurahmen und/oder dem mittleren Rahmenteil verbunden, wobei die Schwenkbewegungen der Seitenrahmen um eine jeweilige in Arbeitsrichtung des Schneidwerks weisende Achse erfolgen. Das Gewicht der Seitenrahmen wird dabei zumindest teilweise jeweils über einen Längslenker und ein daran befestigtes Rad direkt auf dem Boden abgestützt, so dass dieser Gewichtsanteil nicht vom Einzugskanal und der Erntemaschine getragen werden muss. Je nach Schwenkstellung des Längslenkers ergibt sich ein unterschiedlicher Gewichtsanteil des Seitenrahmens, der über das Rad oder den zum Seitenrahmen gehörigen Teil des Messerbalkens auf dem Boden abgestützt ist. Die Schwenklage des Längslenkers ist über einen motorischen Verstellantrieb auf einen gewünschten Anstellwinkel einstellbar. Um hier eine besonders feinfühlige Bodenanpassung des Messerbalkens auch im Bereich der Seitenrahmen zu ermöglichen, wird die vorstehend zur Verstellung des Schnittwinkels des mittleren Rahmenteils offenbarte Vorrichtung mit einer federnden Abstützung des Messerbalkens gegen einen längenveränderlichen Kraftspeicher über einen Kipphebel als Vorrichtung zur federnden Abstützung des Längslenkers über einen Kipphebel gegen einen längenveränderlichen Kraftspeicher übernommen, wobei auch in diese Vorrichtung die Anbindung des motorischen Verstellantriebs in die Verstellkinematik übernommen wird.

Für die Ausgestaltung und die Vorteile dieser Ausgestaltung der federnden Abstützung der Längslenker gelten die vorstehenden Ausführungen zur Ausgestaltung der federnden Abstützung des Rahmenteils entsprechend.

Nach einer Ausgestaltung der Erfindung ist der längenveränderliche Kraftspeicher aus einer oder mehreren Federn gebildet. Auch hierzu gelten die vorstehenden Ausführungen zur Ausgestaltung der federnden Abstützung des Rahmenteils für die federnde Abstützung der Längslenker entsprechend.

Nach einer Ausgestaltung der Erfindung ist dem Längslenker ein Sensor zugeordnet, der die aktuelle Schwenklage des Längslenkers und/oder die auf den Längslenker einwirkende Kraft erfasst, der Sensor ist mit einer Auswerteelektronik verbunden, an die er ein der aktuellen Schwenklage oder der einwirkenden Kraft entsprechendes Sensorsignal übermittelt, und die Auswerteelektronik weist ein Programm auf, das mit einer entsprechenden Programmierung ein Warnsignal generiert, wenn sich das Sensorsignal im Bereich eines oberen oder unteren Grenzwertes befindet. Auch hierzu gelten die vorstehenden Ausführungen zur Ausgestaltung der sensorischen Überwachung der federnden Abstützung des Rahmenteils mit einer Auswerteelektronik für die federnde Abstützung der Längslenker entsprechend.

Nach einer Ausgestaltung der Erfindung ist an dem Längslenker ein Sensor angeordnet, der die aktuelle Schwenklage des Längslenkers und/oder die auf den Längslenker einwirkende Kraft erfasst, der Sensor ist mit einer Auswerteelektronik verbunden, an die er ein der aktuellen Schwenklage oder der einwirkenden Kraft entsprechendes Sensorsignal übermittelt, die Auswerteelektronik weist ein Programm auf, das mit einer entsprechenden Programmierung das Sensorsignal mit einem Sollwert vergleicht, mit dem motorischen Verstellantrieb verbunden ist und einen Stellbefehl an den Verstellantrieb ausgibt, wenn das Sensorsignal um ein vorgegebenes Maß von dem Sollwert abweicht, wobei der Stellbefehl den Verstellantrieb in eine Richtung bewegt, mit dem durch eine Kippbewegung des Kipphebels die Vorspannung des längenveränderlichen Kraftspeichers erhöht oder abgesenkt wird, und/oder die Auswerteelektronik weist ein Programm auf, das mit einer entsprechenden Programmierung das Sensorsignal mit einem Sollwert vergleicht, mit dem motorischen Verstellantrieb verbunden ist und einen Stellbefehl an den Verstellantrieb ausgibt, wenn das Sensorsignal um ein vorgegebenes Maß von dem Sollwert abweicht, wobei der Stellbefehl den Verstellantrieb in eine Richtung bewegt, durch die sich die Differenz zwischen dem Sensorsignal und dem Sollwert verringert. Auch hierzu gelten die vorstehenden Ausführungen zur Ausgestaltung der Regelung der federnden Abstützung des Rahmenteils mit einer Auswerteelektronik und der gezielten Ansteuerung des motorischen Verstellantriebs durch die Auswerteelektronik für die federnde Abstützung der Längslenker entsprechend.

Nach einer Ausgestaltung der Erfindung ist das Gewicht der Seitenrahmen zumindest teilweise jeweils von einer Spannfeder gehalten, die sich quer zur Arbeitsrichtung erstrecken, hinter der Rückwand der Seitenrahmen angeordnet und mit dem Anbaurahmen verbunden sind, wobei der von den Spannfedern gehaltene Gewichtsanteil über eine mit einer Stellvorrichtung verstellbaren Vorspannung der Spannfedern veränderlich ist. Bei dieser Ausgestaltung der Erfindung sind die Seitenrahmen zumindest teilweise vom Anbaurahmen gehalten, so dass die Seitenrahmen nicht mit ihrem vollen Gewicht auf den Messerbalken drücken. Über die Spannfeder ist der Anteil des Gewichts der Seitenrahmen, der vom Anbaurahmen gehalten wird, variabel und wahlweise einstellbar. Durch die zumindest teilweise Entlastung des Seitenrahmens kann der Messerbalken einem ansteigenden Bodendruck leichter durch eine Ausweichbewegung entgegenwirken. Die Anpassung erfolgt schneller gegen geringere Widerstände. Bei einer Ausweichbewegung werden in der Spannfeder aber auch Rückstellkräfte aufgebaut, durch die sich der Seitenrahmen wieder absenkt, wenn der Bodendruck gegen den Messerbalken nachlässt. Die Seitenrahmen können sich auf diese Weise schnell, leicht und flexibel an Unebenheiten des Bodens anpassen, auf die das Schneidwerk bei der Ernte trifft.

Nach einer Ausgestaltung der Erfindung sind an den Seitenrahmen Sensoren vorhanden, die eine aktuelle Winkellage eines zugeordneten Seitenrahmens zum Anbaurahmen und/oder zum Rahmenteil ermitteln, die Sensoren sind mit der Auswerteelektronik verbunden und übermitteln die Sensorwerte an die Auswerteelektronik, und die Auswerteelektronik weist ein Programm auf, das mit einer entsprechenden Programmierung einen Stellbefehl an einen Verstellantrieb zur Verstellung des federnden Längslenkers in Abhängigkeit von dem Sensorwert über die aktuelle Winkellage des zugeordneten Seitenrahmens bestimmt. Bei dieser Ausgestaltung der Erfindung erfolgt eine automatisierte Verstellung der Schwenklage des federnden Längslenkers über die sensorgestützte Kontrolle der Schwenklage des Seitenrahmens. Wird der Seitenrahmen gegen die Haltekraft der Spannfeder entlastet, indem der Seitenrahmen sich gegenüber dem Mittelrahmen in eine nach unten abgewinkelte Position bewegt, so wird der Verstellantrieb des federnden Längslenkers in eine Richtung verstellt, die den Kraftspeicher teilweise entspannt und damit den Auflagedruck des Messerbalkens näherungsweise gleich hält. Zusätzlich zum Sensor, der die Schwenklage des Seitenrahmens überwacht, kann auch noch ein Lastsensor vorhanden sein, der die Belastung der Spannfeder ermittelt und an die Auswerteelektronik übermittelt. Der Sensorwert über die aktuell auf die Spannfeder einwirkende Gewichtslast kann in die Bestimmung eines Wertes zur Betätigung des Verstellantriebs einfließen.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nach-folgenden gegenständlichen Beschreibung und den Zeichnungen entnehmen.

Die Erfindung soll nun anhand von Ausführungsbeispielen näher erläutert wer-den. Es zeigen:
Fig. 1: einen Teil einer Erntemaschine mit einem Schneidwerk aus einer Ansicht von schräg hinten,
Fig. 2: eine vergrößerte Darstellung des Schneidwerks mit einem Rechteck, das den in Fig. 3 vergrößert dargestellten Bereich markiert,
Fig. 3: Details der Vorrichtung zur Schnittwinkelverstellung,
Fig. 4: ein Hebelgestänge mit Sensor,
Fig. 5: einen Datenfluss von Sensorwerten,
Fig. 6: eine vergrößerte Darstellung des Anbindungsbereichs eines Rades an einen Seitenrahmen, und
Fig. 7: eine vergrößerte Ansicht der Halterung der Seitenrahmen.

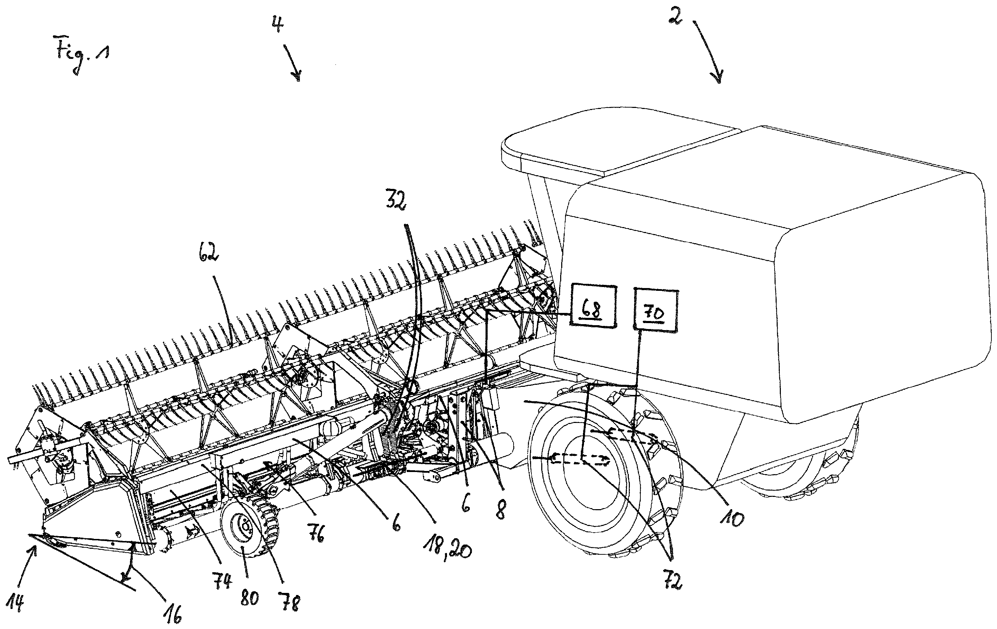

In Fig. 1 ist ein Teil einer Erntemaschine 2 mit einem Schneidwerk 4 aus einer Ansicht von schräg hinten gezeigt. Das Schneidwerk 4 verfügt über ein Rahmenteil 6, das über einen Anbaurahmen 8 mit dem Einzugskanal 10 der Erntemaschine 2 verbunden ist.

Der am vorderen Ende des Schneidwerks 4 befestigte Messerbalken mit einer Anzahl nebeneinander angeordneten Messerklingen als Schneidelement 14 ist über eine Anzahl von Schwingen 12 mit dem Rahmenteil 6 verbunden. Die Schwingen 12 sind im Ausführungsbeispiel starr ausgeführt und bilden mit dem Rahmenteil 6 eine starre Baueinheit. Der Schnittwinkel 16, mit dem das Schneidelement 14 im Verhältnis zum horizontalen Boden angestellt ist, kann beim Schneidwerk 4 verstellt und auf einen gewünschten Wert eingestellt werden.

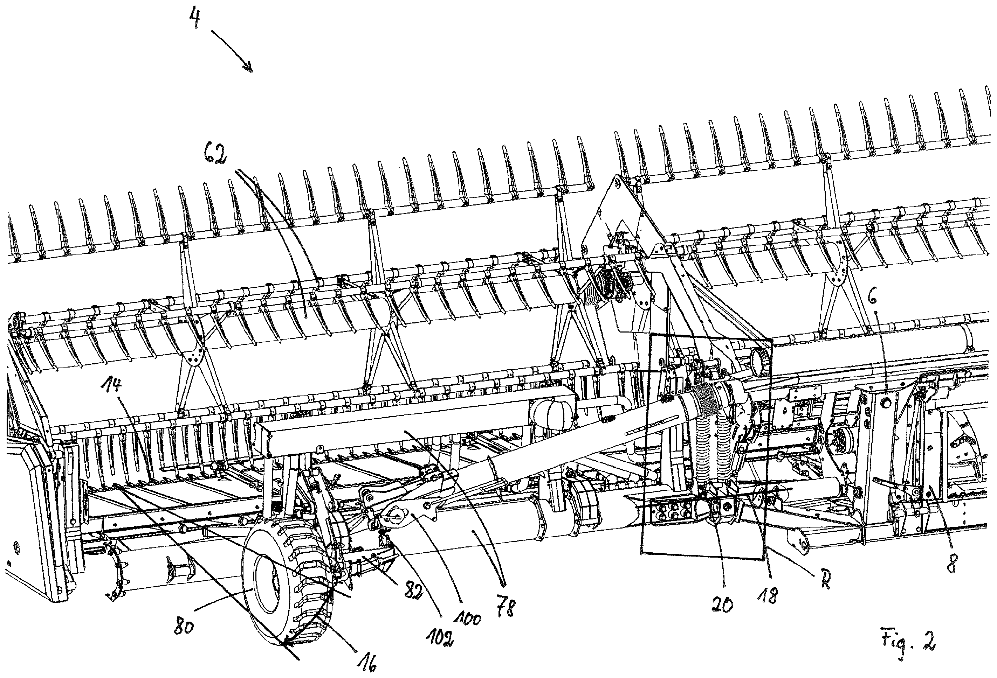

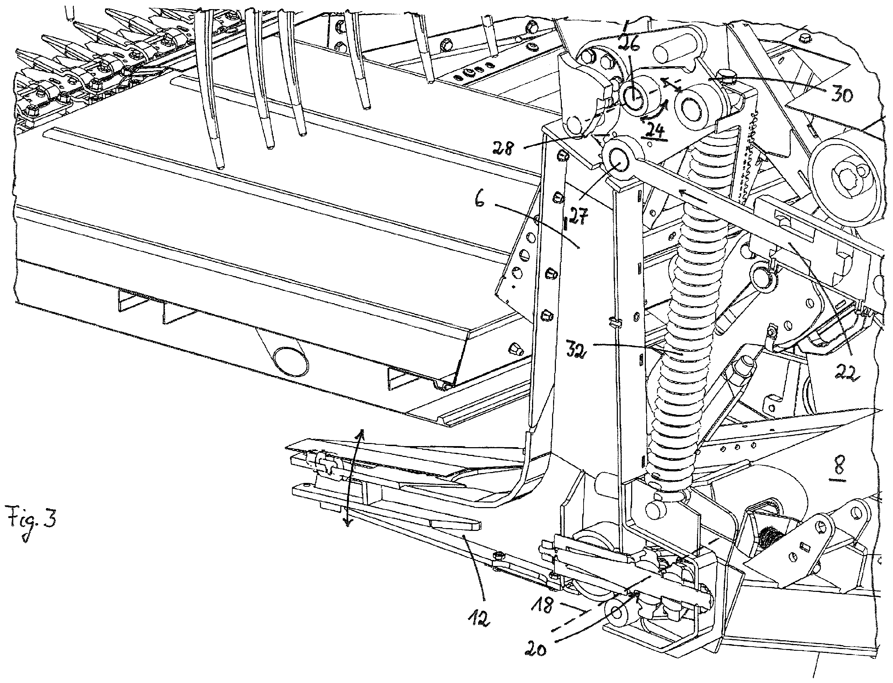

In Fig. 2 ist eine vergrößerte Darstellung des Schneidwerks 4 gezeigt. Die Vorrichtung zur Einstellung des Schnittwinkels 16 der Schneidelemente 14 befindet sich an der Rückseite 76 des Schneidwerks 4 in dem Rechteck R, dessen Inhalt in Fig. 3 vergrößert dargestellt ist. Der oder die Kipphebel 24 sind am oberen Ende oder oberhalb der Rückwand 74 des Schneidwerks 4 angeordnet. Der oder die längenveränderlichen Kraftspeicher 32 sind auf der Rückseite 76 der Rückwand 74 in einer genau oder zumindest überwiegend vertikalen Ausrichtung angeordnet.

In Fig. 3 sind die Details der Vorrichtung zur Schnittwinkelverstellung genauer erkennbar. Das Rahmenteil 6 ist in dem am Anbaurahmen 8 befestigten Drehlager 20 um die Achse 18 drehbar gelagert. Zur Verstellung des Schnittwinkels 16 ist ein Hydraulikzylinder als Verstellantrieb 22 vorhanden. Bei einer Ausfahrbewegung in Richtung des in die Kolbenstange eingezeichneten Pfeils schiebt der Verstellantrieb 22 das obere Ende des Rahmenteils 6 vom Anbaurahmen 8 weg, wobei sich das Rahmenteil 6 dabei um die Achse 18 dreht. Dadurch wird der Schnittwinkel 16, mit dem das Schneidelement 14 im Verhältnis zum Boden gehalten ist, steiler. Bei einer entgegengesetzten Bewegung wird der Anstellwinkel 16 flacher. Auf diese Weise ist ein gewünschter Schnittwinkel des Schneidelements 14 einstellbar.

Der Verstellantrieb 22 greift jedoch nicht direkt am Rahmenteil 6 an, sondern ist drehbeweglich mit der ersten Seite 28 eines um eine Achse 26 drehbeweglichen Kipphebels 24 verbunden, der über die Achse 26 mit dem Rahmenteil 6 verbunden ist. Die Achse 26 verläuft quer zur Arbeitsrichtung des Schneidwerks 4, wie in gestrichelter Linie gezeigt, wobei diese Ausrichtung zumindest annähernd eingehalten sein sollte, geringfügige Abweichungen bedeuten hier aber keine wesentliche Funktionsbeeinträchtigung. Wenn sich der Verstellantrieb 22 in einer unveränderten Stellung befindet, bildet der Angriffspunkt 27 des Verstellantriebs 22 am Kipphebel 24 einen Fixpunkt, um den sich der Kipphebel 24 mit der Achse 26 in die Richtung des entsprechend eingezeichneten Doppelpfeils herumdreht, wenn sich das Rahmenteil 6 durch einen sich verändernden Bodendruck um die Achse 18 nach oben oder unten bewegt, wie es der im Bereich der Schwinge 12 eingezeichnete Doppelpfeil andeutet.

An der zweiten Seite 30 des Kipphebels 24 greift ein längenveränderlicher Kraftspeicher 32 drehbeweglich an. Das andere Ende des längenveränderlichen Kraftspeichers 32 ist mit dem Anbaurahmen 8 verbunden. Im gezeigten Ausführungsbeispiel ist der längenveränderliche Kraftspeicher 32 eine Spiralfeder. Der längenveränderliche Kraftspeicher 32 kann auch aus mehreren Spiralfedern gebildet sein, wie Fig. 2 zeigt. Werden die Schwingen 12 mit ihrem vorderen Ende, an dem das Schneidelement 14 befestigt ist, nach oben gedrückt, beispielsweise durch einen Bodenkontakt, so drücken sie mit der Drehbewegung des mit den Schwingen 12 verbundenen Rahmenteils 6 die Achse 26, an der der Kipphebel 24 befestigt ist, entlang einer kreisförmigen Bewegung um die Achse 18 herum nach hinten. Die Anhebekraft kann direkt auf eine oder mehrere Schwingen 12 einwirken, sie kann aber auch indirekt auf das Schneidelement 14 oder mit den Schwingen 12 verbundene Gleitplatten einwirken, die unterhalb der Schwingen 12 auf der Unterseite des Schneidwerks 4 befestigt sein können und die Anhebekraft auf eine oder mehrere Schwingen 12 übertragen. Bei der Drehbewegung des Kipphebels 24 um die Achse 26 herum wird der längenveränderliche Kraftspeicher 32 zusammengeschoben. Fällt die Kraft weg, mit der die Schwingen 12 nach oben gedrückt wurden, bewegen die im längenveränderlichen Kraftspeicher 32 vorhandenen Rückstellkräfte den Kipphebel 24 wieder in die Neutralstellung. Bei dieser Rückstellbewegung bewegt sich über den Kipphebel 24 auch das Rahmenteil 6 mit den Schwingen 12 wieder in die Ausgangsstellung zurück.

Auf die beschriebene Weise kann sich das Rahmenteil 6 bei Bodenkontakt Veränderungen in der Bodenkontur auf eine sehr flexible Weise gegen und mit der Kraft des längenveränderlichen Kraftspeichers 32 nach oben und unten anpassen.

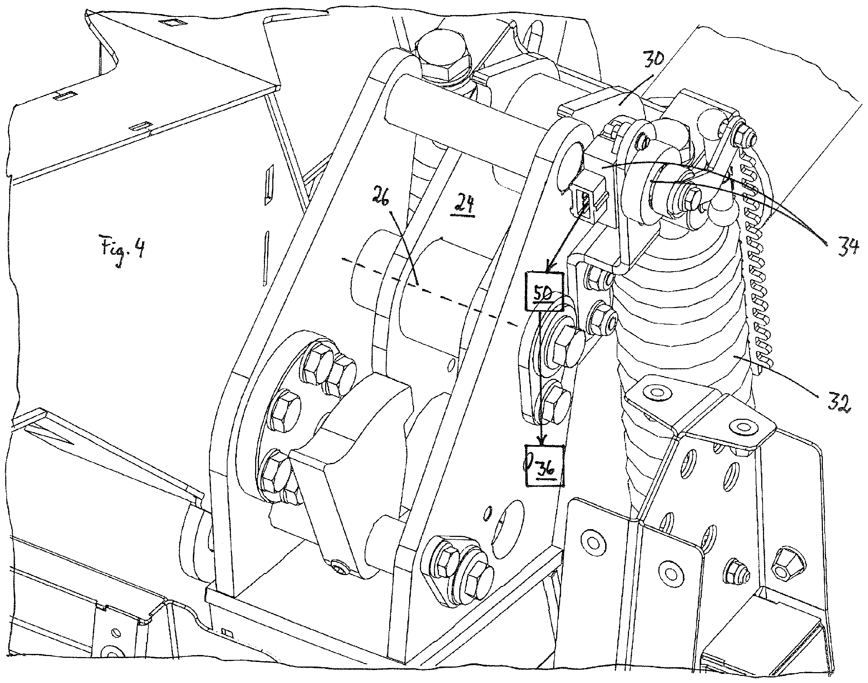

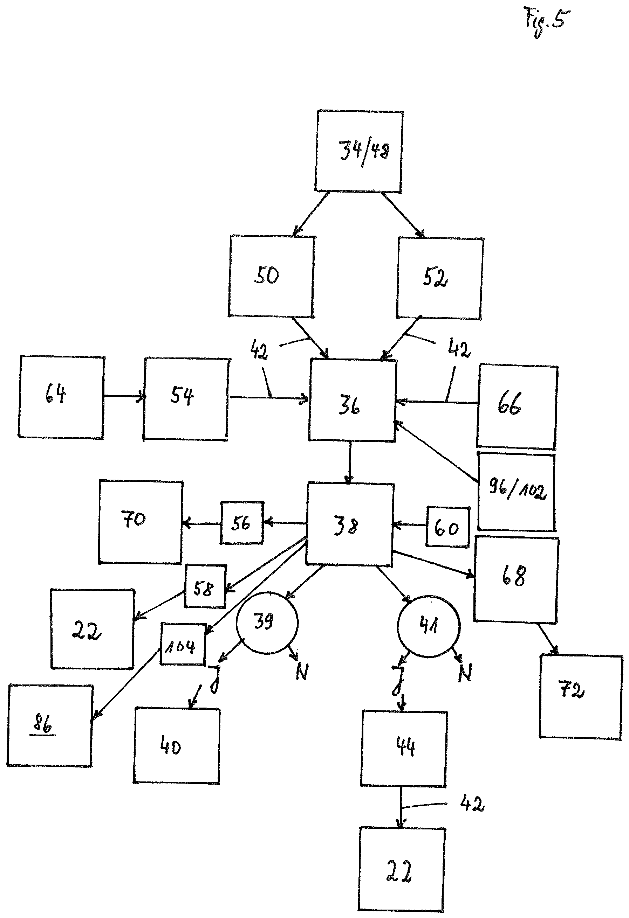

In Fig. 4 ist ein Sensor 34 gezeigt, der über ein Hebelgestänge die Auslenkbewegungen des längenveränderlichen Kraftspeichers 32 erfasst. Der Sensor 34 kann anstelle einer Erfassung der Auslenkbewegungen des längenveränderlichen Kraftspeichers 32 auch darauf ausgelegt werden, die Kippbewegungen des Kipphebels 24 zu erfassen. Der Sensor 34 übermittelt die gemessenen Bewegungsdaten über eine Verbindungsleitung 42 als Sensorsignal 50 an eine Auswerteelektronik 36, wie auch in Fig. 5 gezeigt. Diese verfügt über ein Programm 38, das an einem Entscheidungspunkt 39 mit einer entsprechenden Programmierung ein Warnsignal 40 generiert, wenn sich das Sensorsignal im Bereich eines oberen oder unteren Grenzwertes befindet.

In Fig. 5 ist der Datenfluss von Sensorwerten dargestellt. Das Programm 38 der Auswerteelektronik 36 vergleicht an einem Entscheidungspunkt 41 mit einer entsprechenden Programmierung das Sensorsignal 50 mit einem Sollwert 60. Die Auswerteelektronik ist mit dem motorischen Verstellantrieb 22 verbunden und gibt einen Stellbefehl 44 an den Verstellantrieb 22 aus, wenn das Sensorsignal 50 um ein vorgegebenes Maß von dem Sollwert 60 abweicht. Der Stellbefehl 44 bewegt den Verstellantrieb 22 in eine Richtung, mit dem durch eine Kippbewegung des Kipphebels 24 die Vorspannung des längenveränderlichen Kraftspeichers 32 erhöht oder abgesenkt wird. Die Auswerteelektronik 36 kann auch ein Programm 38 aufweisen, das mit einer entsprechenden Programmierung das Sensorsignal 50 mit einem Sollwert 60 vergleicht, mit dem motorischen Verstellantrieb 22 verbunden ist und einen Stellbefehl 44 an den Verstellantrieb 22 ausgibt, wenn das Sensorsignal 50 um ein vorgegebenes Maß von dem Sollwert 60 abweicht, wobei der Stellbefehl 44 den Verstellantrieb 22 in eine Richtung bewegt, durch die sich die Differenz zwischen dem Sensorsignal 50 und dem Sollwert 60 verringert.

In einer abweichenden Ausgestaltung erhält das Programm 38 kein Sensorsignal 50 über eine Bewegung eines Bauteils, sondern ein Kraftsensorsignal 52 aus einem Kraftsensor 48 über eine Veränderung einer einwirkenden Kraft, wie beispielsweise den Druck in einem Hydrauliksystem. Das Programm 38 der Auswerteelektronik 36 vergleicht dann mit einer entsprechenden Programmierung das Kraftsensorsignal 52 mit einem Sollwert 60, die Auswerteelektronik 36 ist mit dem motorischen Verstellantrieb 22 verbunden und gibt einen Stellbefehl 44 an den Verstellantrieb 22 aus, wenn das Kraftsensorsignal 52 um ein vorgegebenes Maß von dem Sollwert 60 abweicht. Der Stellbefehl 44 bewegt den Verstellantrieb 22 in eine Richtung, mit dem durch eine Kippbewegung des Kipphebels 24 die Vorspannung des längenveränderlichen Kraftspeichers 32 erhöht oder abgesenkt wird. Die Auswerteelektronik 36 kann auch ein Programm 38 aufweisen, das mit einer entsprechenden Programmierung das Kraftsensorsignal 52 mit einem Sollwert 60 vergleicht, mit dem motorischen Verstellantrieb 22 verbunden ist und einen Stellbefehl 44 an den Verstellantrieb 22 ausgibt, wenn das Kraftsensorsignal 52 um ein vorgegebenes Maß von dem Sollwert 60 abweicht, wobei der Stellbefehl 44 den Verstellantrieb 22 in eine Richtung bewegt, durch die sich die Differenz zwischen dem Kraftsensorsignal 52 und dem Sollwert 60 verringert.

In Fig. 1 ist gezeigt, dass das Schneidwerk 4 eine verstellbare angetriebene Förderhilfe 62 in Gestalt einer Haspel aufweist, deren aktuelle Position von einem Positionssensor 64 überwacht ist. Der Positionssensor 64 ist mit der Auswerteelektronik 36 verbunden und übermittelt den Positionssensorwert 54 an die Auswerteelektronik 36. Die Auswerteelektronik 36 weist ein Programm 38 auf, das mit einer entsprechenden Programmierung den Stellbefehl 44 in Abhängigkeit von dem Positionssensorwert 54 über die aktuelle Position der Förderhilfe 62 bestimmt. Der Stellbefehl 44 wird wieder an den Verstellantrieb 22 übermittelt.

Nach einem Ausführungsbeispiel ist die Auswerteelektronik 36 mit einem Geschwindigkeitssensor 66 verbunden und die Auswerteelektronik 36 weist ein Programm 38 auf, das mit einer entsprechenden Programmierung den Stellbefehl 44 in Abhängigkeit von dem vom Geschwindigkeitssensor 66 übermittelten Geschwindigkeitssensorsignal bestimmt.

Nach einem Ausführungsbeispiel weist die Auswerteelektronik 36 ein Programm 38 auf, das mit einer entsprechenden Programmierung bei der Auswertung des Sensorsignals 50 oder des Kraftsensorsignals 52 eine Überschreitung eines Grenzwertes über ein Zeitintervall hinweg feststellt und ein Stellsignal 56 an eine Höhensteuerung 70 des Einzugskanals 10 der Erntemaschine 2 generiert, auf das die Höhensteuerung 70 den Einzugskanal 10 anhebt oder absenkt.

Die vorstehend beschriebenen Verstellantriebe 22 können natürlich auf gegenüberliegenden Seiten des Einzugskanals 10 vorhanden sein und mit entsprechenden Kipphebeln 24 und längenveränderlichen Kraftspeichern 32 eine Verschwenkung des Rahmenteils 6 um die Achse 18 ermöglichen. Dadurch ist es auch möglich, dass das Rahmenteil 6 auf seinen rechten und linken Seiten unterschiedlich weit einfedert oder sogar auf einer Seite einfedert und auf der anderen Seite ausfedert und sich nach einer Einfederbewegung wieder in die Ausgangslage zurückbewegt, wenn die die Einfederbewegung auslösende Kraftkomponente wieder entfällt. Die Auswerteelektronik 36 kann mit dem Programm 38 die Verstellantriebe 22 auch unabhängig voneinander mit jeweils eigenen Stellbefehlen 44 bewegen, wenn das aus den Sensordaten von den gegenüberliegenden Seiten des Einzugskanals 10 sinnvoll erscheint. Auch kann die Auswerteelektronik 36 ein Stellsignal 56 generieren und dieses an eine mit der Auswerteelektronik 36 verbundene Verschwenksteuerung 68 zur Verschwenkung des Schneidwerks 4 um die in Arbeitsrichtung weisende Längsachse der Erntemaschine 2 übermitteln. Die Verschwenksteuerung 68 dreht das Schneidwerk 4 dann über die Betätigung eines Verschwenkantriebs 72 in eine Richtung um die Längsachse.

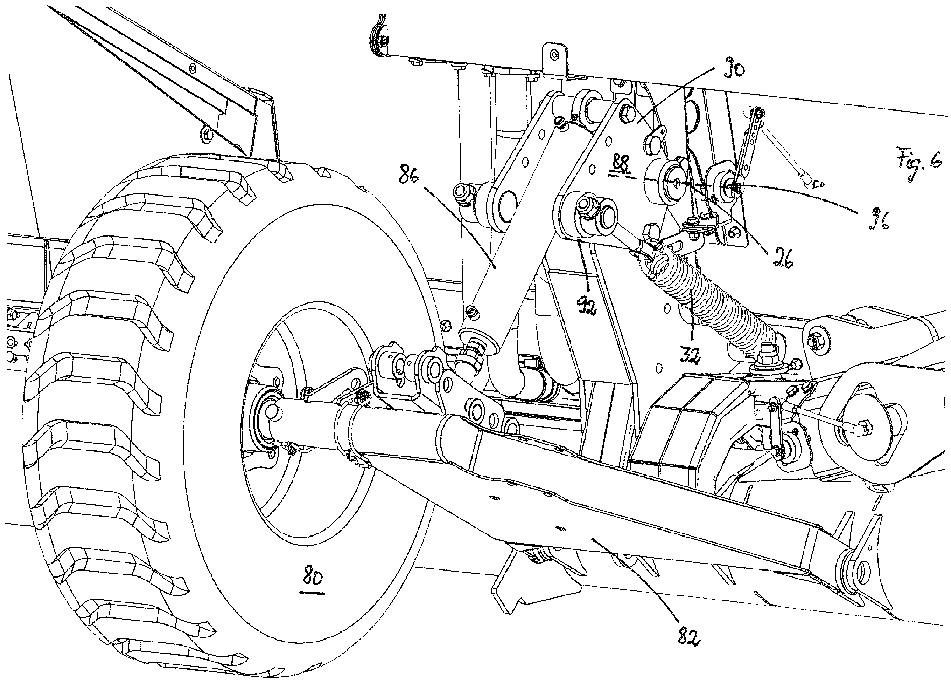

Der Anbaurahmen 8 und/oder das Rahmenteil 6 sind in einem zeichnerisch nicht näher dargestellten Ausführungsbeispiel an gegenüberliegenden Seiten mit dem in Fig. 2 gezeigten Seitenrahmen 78 schwenkbeweglich verbunden, an deren in Arbeitsrichtung weisender Längsseite ebenfalls Schneidelemente 14 angeordnet sind. Die Seitenrahmen 78 sind jeweils über ein Rad 80 auf dem Boden abgestützt und das jeweilige Rad 80 ist an einem um eine Achse 84 schwenkbeweglich mit dem Seitenrahmen 78 verbundenen Längslenker 82 befestigt. Die Fig. 6 zeigt in einer vergrößerten Ansicht die Aufhängung eines Rades 80 genauer. Ein jeweiliger Längslenker 82 ist über einen motorischen Verstellantrieb 86 in seiner Höhenlage verstellbar. Der Verstellantrieb 86 ist mit einer ersten Seite 90 eines um eine Achse 26 drehbeweglichen Kipphebels 88 drehbeweglich verbunden, an dessen zweiter Seite 92 greift ein längenveränderlicher Kraftspeicher 32 drehbeweglich an. Der Längslenker 82 ist gegen die Kraft des längenveränderlichen Kraftspeichers 32 über eine Kippbewegung des Kipphebels 88 beweglich. Für die Möglichkeit der Räder 80, gegen die Kraft des längenveränderlichen Kraftspeichers einzufedern und nach Wegfall einer Kraftkomponente wieder in die Ausgangsstellung auszufedern, gelten die vorstehenden Ausführungen entsprechend. Dem Längslenker 82 ist ein Sensor 96 zugeordnet, der beispielsweise als Drehpotentiometer die aktuelle Schwenklage des Längslenkers 82 erfasst. Der Sensor 96 ist wie in Fig. 5 gezeigt mit einer Auswerteelektronik 36 verbunden, an die er ein der aktuellen Schwenklage oder der einwirkenden Kraft entsprechendes Sensorsignal übermittelt, und die Auswerteelektronik 36 weist ein Programm 38 auf, das mit einer entsprechenden Programmierung ein Warnsignal 40 generiert, wenn sich das Sensorsignal im Bereich eines oberen oder unteren Grenzwertes befindet.

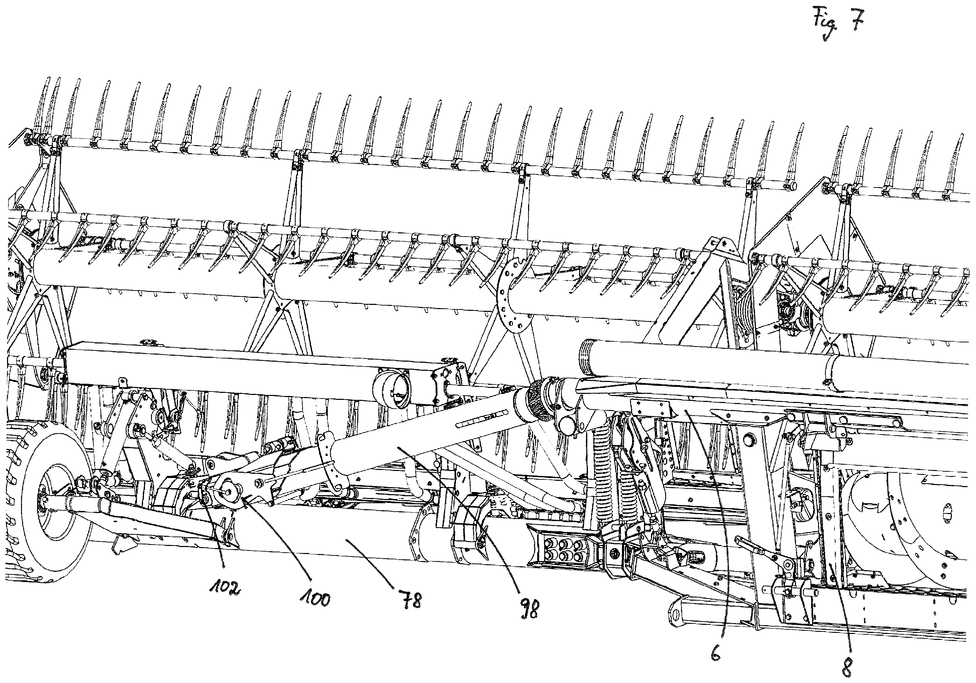

Wie der vergrößerten Darstellung in Fig. 7 zu entnehmen ist, wird das Gewicht der Seitenrahmen 78 zumindest teilweise jeweils von einer Spannfeder 98 gehalten, die sich quer zur Arbeitsrichtung erstrecken, hinter der in Fig. 7 zeichnerisch nicht genauer dargestellten Rückwand 74 der Seitenrahmen 78 angeordnet und mit dem Anbaurahmen 8 verbunden sind. Der von den Spannfedern 98 gehaltene Gewichtsanteil am Gewicht der Seitenrahmen 78 und der daran angebauten Maschinenkomponenten ist über eine mit einer Stellvorrichtung 100 verstellbaren Vorspannung der Spannfedern 98 veränderlich. An den Seitenrahmen 78 sind Sensoren 102 vorhanden, die eine aktuelle Winkellage eines zugeordneten Seitenrahmens 78 zum Anbaurahmen 8 und/oder zum Rahmenteil 6 ermitteln. Die Sensoren 102 sind mit der Auswerteelektronik 36 verbunden und übermitteln die Sensorwerte 50 an die Auswerteelektronik 36, wie in Fig. 5 gezeigt. Die Auswerteelektronik 36 weist ein Programm 38 auf, das mit einer entsprechenden Programmierung den Stellbefehl 104 an einen Verstellantrieb 86 zur Verstellung der aktuellen Winkellage des zugeordneten Radträgers 82 mit Kraftspeicher 32 in Abhängigkeit von dem Sensorwert 50 bestimmt. Über den vom Stellbefehl 104 gesteuerten Verstellantrieb 86 kann die Vorspannung des entsprechenden Kraftspeichers 32 verändert werden.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 2: Erntemaschine
- 4: Schneidwerk
- 6: Rahmenteil
- 8: Anbaurahmen
- 10: Einzugskanal
- 12: Schwinge
- 14: Schneidelement
- 16: Schnittwinkel
- 18: Achse
- 20: Drehlager
- 22: Verstellantrieb
- 24: Kipphebel
- 26: Achse (Kipphebel)
- 27: Angriffspunkt
- 28: erste Seite
- 30: zweite Seite
- 32: Kraftspeicher
- 34: Sensor (Kraftspeicher/Kipphebel) (Anspruch 3, 4)
- 36: Auswerteelektronik
- 38: Programm
- 39: Entscheidungspunkt
- 40: Warnsignal
- 41: Entscheidungspunkt
- 42: Verbindungsleitung
- 44: Stellbefehl
- 46: Antrieb für Kraftspeicher
- 48: Kraftsensor
- 50: Sensorsignal
- 52: Kraftsensorsignal
- 54: Positionssensorwert
- 56: Stellsignal
- 58: Stellbefehl
- 60: Sollwert
- 62: Förderhilfe (Haspel)
- 64: Positionssensor
- 66: Geschwindigkeitssensor
- 68: Verschwenksteuerung
- 70: Höhensteuerung Einzugskanal
- 72: Verschwenkantrieb
- 74: Rückwand
- 76: Rückseite der Rückwand
- 78: Seitenrahmen
- 80: Rad
- 82: Längslenker
- 84: Achse (Längslenker)
- 86: Verstellantrieb (Längslenker)
- 88: Kipphebel
- 90: erste Seite
- 92: zweite Seite
- 94: Achse (Kipphebel)
- 96: Sensor (Längslenker)
- 98: Spannfeder
- 100: Stellvorrichtung (Spannfeder)
- 102: Sensor (Winkellage)
- 104: Stellbefehl

## Patentansprüche

1. Schneidwerk (4) zum Anbau an eine Erntemaschine (2) mit einem Rahmenteil (6), das mit einem Anbaurahmen (8) verbunden ist, der Verbindungsmittel zum Anbau an einen Einzugskanal (10) einer Erntemaschine (2) aufweist, wobei das Rahmenteil (6) in Arbeitsrichtung weisende Schwingen (12) aufweist, an deren vorderen Enden Schneidelemente (14) zum Schneiden des Ernteguts befestigt sind, einer um eine Achse (18) in einem Drehlager (20) drehbeweglichen Lagerung des Rahmenteils (6) im Anbaurahmen (8), und einem mit dem Rahmenteil (6) verbundenen motorischen Verstellantrieb (22) zur Verstellung des Schnittwinkels (16) der Schneidelemente (14), bei dessen Betätigung sich der Anstellwinkel der Schneidelemente (14) zum Boden verändert, **dadurch gekennzeichnet, dass** der Verstellantrieb (22) mit einer ersten Seite (28) eines um eine Achse (26) drehbeweglichen Kipphebels (24) drehbeweglich verbunden ist, an dessen zweiter Seite (30) ein längenveränderlicher Kraftspeicher (32) drehbeweglich angreift, und das Rahmenteil (6) mit den Schwingen (12) gegen die Kraft des längenveränderlichen Kraftspeichers (32) über eine Kippbewegung des Kipphebels (24) um die quer zur Arbeitsrichtung des Schneidwerks (4) verlaufende Achse (26) beweglich ist, wenn eine Anhebekraft auf zumindest eine Schwinge (12) einwirkt.

2. Schneidwerk (4) nach Anspruch 1, **dadurch gekennzeichnet, dass** der längenveränderliche Kraftspeicher (32) aus einer oder mehreren Federn gebildet ist.

3. Schneidwerk (4) nach Anspruch 1 oder 2, **dadurch gekennzeichnet, dass** an dem Schneidwerk (4) ein Sensor (34) angeordnet ist, der die aktuelle Länge des längenveränderlichen Kraftspeichers (32) oder die Schwenklage des Kipphebels (24) erfasst, der Sensor (34) mit einer Auswerteelektronik (36) verbunden ist, an die er ein der Länge oder der Schwenklage entsprechendes Sensorsignal (50) übermittelt, und die Auswerteelektronik (36) ein Programm (38) aufweist, das mit einer entsprechenden Programmierung ein Warnsignal (40) generiert, wenn sich das Sensorsignal im Bereich eines oberen oder unteren Grenzwertes befindet.

4. Schneidwerk (4) nach einem der Ansprüche 1 bis 3, **dadurch gekennzeichnet, dass** an dem Schneidwerk (4) ein Sensor (34) angeordnet ist, der die aktuelle Länge des längenveränderlichen Kraftspeichers (32) oder die Schwenklage des Kipphebels (24) erfasst, der Sensor (34) mit einer Auswerteelektronik (36) verbunden ist, an die er ein der Länge oder der Schwenklage entsprechendes Sensorsignal (50) übermittelt, die Auswerteelektronik (36) ein Programm (38) aufweist, das mit einer entsprechenden Programmierung das Sensorsignal (50) mit einem Sollwert (60) vergleicht, mit dem motorischen Verstellantrieb (22) verbunden ist und einen Stellbefehl (44) an den Verstellantrieb (22) ausgibt, wenn das Sensorsignal (50) um ein vorgegebenes Maß von dem Sollwert (60) abweicht, wobei der Stellbefehl (44) den Verstellantrieb (22) in eine Richtung bewegt, mit dem durch eine Kippbewegung des Kipphebels (24) die Vorspannung des längenveränderlichen Kraftspeichers (32) erhöht oder abgesenkt wird, und/oder die Auswerteelektronik (36) ein Programm (38) aufweist, das mit einer entsprechenden Programmierung das Sensorsignal (50) mit einem Sollwert (60) vergleicht, mit dem motorischen Verstellantrieb (22) verbunden ist und einen Stellbefehl (44) an den Verstellantrieb (22) ausgibt, wenn das Sensorsignal (50) um ein vorgegebenes Maß von dem Sollwert (60) abweicht, wobei der Stellbefehl (44) den Verstellantrieb (22) in eine Richtung bewegt, durch die sich die Differenz zwischen dem Sensorsignal (50) und dem Sollwert (60) verringert.

5. Schneidwerk (4) nach Anspruch 1, **dadurch gekennzeichnet, dass** der längenveränderliche Kraftspeicher (32) einen oder mehrere kraftabhängig gesteuerte Antriebe (46) aufweist, ein Kraftsensor (48) die auf das Rahmenteil (6) und/oder den längenveränderlichen Kraftspeicher (32) einwirkende Kraft erfasst und der Kraft-sensor (48) ein entsprechendes Kraftsensorsignal (52) an die mit dem Kraftsensor (48) verbundene Auswerteelektronik (36) übermittelt, wobei die Auswerteelektronik (36) ein Programm (38) aufweist, das mit einer entsprechenden Programmierung das Kraftsensorsignal (52) mit einem Sollwert (60) vergleicht, mit dem motorischen Verstellantrieb (22) verbunden ist und einen Stellbefehl (44) an den Verstellantrieb (22) ausgibt, wenn das Kraftsensorsignal (52) um ein vorgegebenes Maß von dem Sollwert (60) abweicht, wobei der Stellbefehl (44) den Verstellantrieb (22) in eine Richtung bewegt, mit dem durch eine Kippbewegung des Kipphebels (24) die Vorspannung des längenveränderlichen Kraftspeichers (32) erhöht oder abgesenkt wird, und/oder die Auswerteelektronik (36) ein Programm (38) aufweist, das mit einer entsprechenden Programmierung das Kraftsensorsignal (52) mit einem Sollwert (60) vergleicht, mit dem motorischen Verstellantrieb (22) verbunden ist und einen Stellbefehl (44) an den Verstellantrieb (22) ausgibt, wenn das Kraftsensorsignal (52) um ein vorgegebenes Maß von dem Sollwert (60) abweicht, wobei der Stellbefehl (44) den Verstellantrieb (22) in eine Richtung bewegt, durch die sich die Differenz zwischen dem Kraftsensorsignal (52) und dem Sollwert (60) verringert.

6. Schneidwerk (4) nach einem der vorhergehenden Ansprüche 4 oder 5, **dadurch gekennzeichnet, dass** das Schneidwerk (4) eine verstellbare angetriebene Förderhilfe (62) aufweist, deren aktuelle Position von einem Positionssensor (64) überwacht ist, der mit der Auswerteelektronik (36) verbunden ist und der den Positionssensorwert (54) an die Auswerteelektronik (36) übermittelt, und die Auswerteelektronik (36) ein Programm (38) aufweist, das mit einer entsprechenden Programmierung einen Stellbefehl (44) an den Verstellantrieb (22) zur Verstellung des Schnittwinkels (16) und/oder der Höhensteuerung (70) des Einzugskanals (10) in Abhängigkeit von dem Positionssensorwert (54) zur aktuellen Position der Förderhilfe (62) bestimmt.

7. Schneidwerk (4) nach einem der vorhergehenden Ansprüche 4 bis 6, **dadurch gekennzeichnet, dass** die Auswerteelektronik (36) mit einem Geschwindigkeitssensor (66) verbunden ist und die Auswerteelektronik (36) ein Programm (38) aufweist, das mit einer entsprechenden Programmierung den Stellbefehl (44) in Abhängigkeit von dem vom Geschwindigkeitssensor (66) übermittelten Geschwindigkeitssensorsignal bestimmt.

8. Schneidwerk (4) nach einem der vorhergehenden Ansprüche 3 bis 7, **dadurch gekennzeichnet, dass** die Auswerteelektronik (36) ein Programm (38) aufweist, das mit einer entsprechenden Programmierung bei der Auswertung des Sensorsignals (50) oder des Kraftsensorsignals (52) eine Überschreitung eines Grenzwertes über ein Zeitintervall hinweg feststellt und ein Stellsignal (56) an eine Höhensteuerung (70) des Einzugskanals (10) der Erntemaschine (2) generiert, auf das die Höhensteuerung (70) den Einzugskanal (10) anhebt oder absenkt.

9. Schneidwerk (4) nach einem der vorhergehenden Ansprüche 1 bis 8, **dadurch gekennzeichnet, dass** auf gegenüberliegenden Seiten des Einzugskanals (10) Verstellantriebe (22) vorhanden sind, die jeweils mit einer ersten Seite (28) eines jeweiligen um eine Achse (94) drehbeweglichen Kipphebels (24) drehbeweglich verbunden sind, an dessen zweiter Seite (30) jeweils ein längenveränderlicher Kraftspeicher (32) drehbeweglich angreift, und das Rahmenteil (6) mit den Schwingen (12) gegen die Kraft des oder der Kraftspeicher (32) über eine Kippbewegung des jeweiligen Kipphebels (24) um die Achse (26) beweglich ist, wenn eine Anhebekraft auf zumindest eine Schwinge (12) einwirkt, wobei das Rahmenteil (6) auch auf gegenüberliegenden Seiten des Einzugskanals (10) mit jeweils einem längenveränderlichen Kraftspeicher (32) abgestützt ist.

10. Schneidwerk (4) nach Anspruch 9, **dadurch gekennzeichnet, dass** die Auswerteelektronik (36) ein Programm (38) aufweist, mit dem mit einer entsprechenden Programmierung die Verstellantriebe (22) unabhängig voneinander mit Stellbefehlen (44) nach den Merkmalen eines der Ansprüche 4 bis 7 beweglich sind.

11. Schneidwerk (4) nach Anspruch 9 oder 10, **dadurch gekennzeichnet, dass** die Auswerteelektronik (36) ein Programm (38) aufweist, das mit einer entsprechenden Programmierung bei der Auswertung der Sensorsignale (50) oder der Kraftsensorsignale (52) eine Überschreitung eines Grenzwertes über ein Zeitintervall hinweg auf einer oder beiden Seiten des Einzugskanals (10) feststellt und bei einer Überschreitung eines Grenzwertes über ein Zeitintervall hinweg auf einer Seite des Einzugskanals (10) oder bei einer Differenz zwischen den Werten der Sensorsignale (50) oder der Kraftsensorsignale (52) auf gegenüberliegenden Seiten des Einzugskanals (10), die über ein Zeitintervall hinweg einen Schwellwert überschreitet, ein Stellsignal (56) generiert und dieses an eine mit der Auswerteelektronik (36) verbundene Verschwenksteuerung (68) zur Verschwenkung des Schneidwerks (4) um die in Arbeitsrichtung weisende Längsachse der Erntemaschine (2) übermittelt, auf das die Verschwenksteuerung (68) das Schneidwerk (4) über die Betätigung eines Verschwenkantriebs (72) in eine Richtung um die Längsachse dreht.

12. Schneidwerk (4) nach einem der vorhergehenden Ansprüche, **dadurch gekennzeichnet, dass** der oder die Kipphebel (24) am oberen Ende oder oberhalb der Rückwand (74) des Schneidwerks (4) angeordnet und der oder die längenveränderlichen Kraftspeicher (32) auf der Rückseite (76) der Rückwand (74) in einer genau oder zumindest überwiegend vertikalen Ausrichtung angeordnet sind.

13. Schneidwerk (4) nach einem der vorhergehenden Ansprüche, **dadurch gekennzeichnet, dass** die Schwingen (12) starr ausgeführt sind und mit dem Rahmenteil (6) eine starre Baueinheit bilden.

14. Schneidwerk (4) nach einem der vorhergehenden Ansprüche, **dadurch gekennzeichnet, dass** der Anbaurahmen (8) und/oder das Rahmenteil (6) an gegenüberliegenden Seiten mit Seitenrahmen (78) schwenkbeweglich verbunden sind, an deren in Arbeitsrichtung weisender Längsseite ebenfalls Schneidelemente (14) angeordnet sind, die Seitenrahmen (78) jeweils über ein Rad (80) auf dem Boden abgestützt sind und das jeweilige Rad (80) an einem um eine Achse (84) schwenkbeweglich mit dem Seitenrahmen (78) verbundenen Längslenker (82) befestigt ist, wobei ein jeweiliger Längslenker (82) über einen motorischen Verstellantrieb (86) in seiner Höhenlage verstellbar ist, der Verstellantrieb (86) mit einer ersten Seite (90) eines um eine Achse (26) drehbeweglichen Kipphebels (88) drehbeweglich verbunden ist, an dessen zweiter Seite (92) ein längenveränderlicher Kraftspeicher (32) drehbeweglich angreift, und der Längslenker (82) gegen die Kraft des längenveränderlichen Kraftspeichers (32) über eine Kippbewegung des Kipphebels (88) beweglich ist.

15. Schneidwerk (4) nach Anspruch 14, **dadurch gekennzeichnet, dass** der längenveränderliche Kraftspeicher (32) aus einer oder mehreren Federn gebildet ist.

16. Schneidwerk (4) nach Anspruch 14 oder 15, **dadurch gekennzeichnet, dass** dem Längslenker (82) ein Sensor (96) zugeordnet ist, der die aktuelle Schwenklage des Längslenkers (82) und/oder die auf den Längslenker (82) einwirkende Kraft erfasst, der Sensor (96) mit einer Auswerteelektronik (36) verbunden ist, an die er ein der aktuellen Schwenklage oder der einwirkenden Kraft entsprechendes Sensorsignal übermittelt, und die Auswerteelektronik (36) ein Programm (38) aufweist, das mit einer entsprechenden Programmierung ein Warnsignal (40) generiert, wenn sich das Sensorsignal im Bereich eines oberen oder unteren Grenzwertes befindet.

17. Schneidwerk (4) nach einem der Ansprüche 14 bis 16, **dadurch gekennzeichnet, dass** an dem Längslenker (82) ein Sensor (96) angeordnet ist, der die aktuelle Schwenklage des Längslenkers (82) und/oder die auf den Längslenker (82) einwirkende Kraft erfasst, der Sensor (96) mit einer Auswerteelektronik (36) verbunden ist, an die er ein der aktuellen Schwenklage oder der einwirkenden Kraft entsprechendes Sensorsignal (50) übermittelt, die Auswerteelektronik (36) ein Programm (38) aufweist, das mit einer entsprechenden Programmierung das Sensorsignal (50) mit einem Sollwert (60) vergleicht, mit dem motorischen Verstellantrieb (86) verbunden ist und einen Stellbefehl (58) an den Verstellantrieb (86) ausgibt, wenn das Sensorsignal (50) um ein vorgegebenes Maß von dem Sollwert (60) abweicht, wobei der Stellbefehl (58) den Verstellantrieb (86) in eine Richtung bewegt, mit dem durch eine Kippbewegung des Kipphebels (88) die Vorspannung des längenveränderlichen Kraftspeichers (32) erhöht oder abgesenkt wird, und/oder die Auswerteelektronik (36) ein Programm (38) aufweist, das mit einer entsprechenden Programmierung das Sensorsignal (50) mit einem Sollwert (60) vergleicht, mit dem motorischen Verstellantrieb (86) verbunden ist und einen Stellbefehl (58) an den Verstellantrieb (86) ausgibt, wenn das Sensorsignal um ein vorgegebenes Maß von dem Sollwert (60) abweicht, wobei der Stellbefehl (58) den Verstellantrieb (86) in eine Richtung bewegt, durch die sich die Differenz zwischen dem Sensorsignal (50) und dem Sollwert (60) verringert.

18. Schneidwerk (4) nach einem der vorhergehenden Ansprüche 14 bis 17, **dadurch gekennzeichnet, dass** das Gewicht der Seitenrahmen (78) zumindest teilweise jeweils von einer Spannfeder (98) gehalten ist, die sich quer zur Arbeitsrichtung erstrecken, hinter der Rückwand (74) der Seitenrahmen (78) angeordnet und mit dem Anbaurahmen (8) verbunden sind, wobei der von den Spannfedern (98) gehaltene Gewichtsanteil über eine mit einer Stellvorrichtung (100) verstellbaren Vorspannung der Spannfedern (98) veränderlich ist.

19. Schneidwerk (4) nach einem der Ansprüche 17 oder 18, **dadurch gekennzeichnet, dass** an den Seitenrahmen (78) Sensoren (102) vorhanden sind, die eine aktuelle Winkellage eines zugeordneten Seitenrahmens (78) zum Anbaurahmen (8) und/oder zum Rahmenteil (6) ermitteln, die Sensoren (102) mit der Auswerteelektronik (36) verbunden sind und die Sensorwerte (50) an die Auswerteelektronik (36) übermitteln, und die Auswerteelektronik (36) ein Programm (38) aufweist, das mit einer entsprechenden Programmierung einen Stellbefehl (104) an einen Verstellantrieb (86) zur Verstellung der Vorspannung des Kraftspeichers (32) in Abhängigkeit von dem Sensorwert (50) über die aktuelle Winkellage des zugeordneten Seitenrahmens (78) bestimmt.

## Claims

1. Cutterbar (4) for mounting to a harvesting machine (2) with a frame part (6) connected to a mounting frame (8) which has connecting means for mounting on a feeder housing (10) of a harvesting machine (2),
wherein the frame part (6) has swing arms (12) pointing in the working direction, to the front ends of which swing arms (12) cutting elements (14) for cutting the crop are fastened, a bearing of the frame part (6) in the mounting frame (8), which bearing is rotatable about an axis (18) in a pivot bearing (20), and a motorized adjustment drive (22) connected to the frame part (6) for adjusting the cutting angle (16) of the cutting elements (14), the actuation of which changes the angle of attack of the cutting elements (14) to the ground, **characterized in that** the adjustment drive (22) is rotatably connected to a first side (28) of a rocker lever (24) which is rotatable about an axis (26) and on the second side (30) of which a length-adjustable power accumulator (32) rotatably engages, and the frame part (6) is movable with the swing arms (12) against the force of the length-adjustable power accumulator (32) via a tilting movement of the rocker lever (24) about the axis (26) extending transversely to the working direction of the cutterbar (4) when a lifting force acts on at least one swing arm (12).

2. Cutterbar (4) according to claim 1, **characterized in that** the length-adjustable power accumulator (32) is formed from one or more springs.

3. Cutterbar (4) according to claim 1 or 2, **characterized in that** a sensor (34) is arranged on the cutterbar (4), which sensor (34) detects the current length of the length-adjustable power accumulator (32) or the pivoting position of the rocker lever (24),
the sensor (34) is connected to an evaluation electronics (36) to which it transmits a sensor signal (50) corresponding to the length or the pivoting position,
and the evaluation electronics (36) has a program (38) which, with corresponding programming, generates a warning signal (40) when the sensor signal is in the range of an upper or lower limit value.

4. Cutterbar (4) according to one of claims 1 to 3, **characterized in that** a sensor (34) is arranged on the cutterbar (4), which sensor (34) detects the current length of the length-adjustable power accumulator (32) or the pivoting position of the rocker lever (24), the sensor (34) is connected to an evaluation electronics (36) to which it transmits a sensor signal (50) corresponding to the length or the pivoting position, the evaluation electronics (36) has a program (38) which, with corresponding programming, compares the sensor signal (50) with a setpoint value (60), is connected to the motorized adjustment drive (22) and issues an actuating command (44) to the adjustment drive (22) if the sensor signal (50) deviates from the setpoint value (60) by a predetermined amount, wherein the actuating command (44) moves the adjustment drive (22) in a direction with which adjustment drive (22) the pretension of the length-adjustable power accumulator (32) is increased or decreased by a tilting movement of the rocker lever (24), and/or the evaluation electronics (36) has a program (38) which, with corresponding programming, compares the sensor signal (50) with a setpoint value (60), is connected to the motorized adjustment drive (22) and issues an actuating command (44) to the adjustment drive (22) if the sensor signal (50) deviates from the setpoint value (60) by a predetermined amount, wherein the actuating command (44) moves the adjustment drive (22) in a direction which reduces the difference between the sensor signal (50) and the setpoint value (60).

5. Cutterbar (4) according to claim 1, **characterized in that** the length-adjustable power accumulator (32) has one or more force-dependent controlled drives (46), a force sensor (48) detects the force acting on the frame part (6) and/or the length-adjustable power accumulator (32) and the force sensor (48) transmits a corresponding force sensor signal (52) to the evaluation electronics (36) connected to the force sensor (48), wherein the evaluation electronics (36) has a program (38) which, with corresponding programming, compares the force sensor signal (52) with a setpoint value (60), is connected to the motorized adjustment drive (22) and issues an actuating command (44) to the adjustment drive (22) if the force sensor signal (52) deviates from the setpoint value (60) by a predetermined amount, wherein the actuating command (44) moves the adjustment drive (22) in a direction with which adjustment drive (22) the pretension of the length-adjustable power accumulator (32) is increased or decreased by a tilting movement of the rocker lever (24), and/or the evaluation electronics (36) has a program (38) which, with corresponding programming, compares the force sensor signal (52) with a setpoint value (60), is connected to the motorized adjustment drive (22) and issues an actuating command (44) to the adjustment drive (22) if the force sensor signal (52) deviates from the setpoint value (60) by a predetermined amount, wherein the actuating command (44) moves the adjustment drive (22) in a direction which reduces the difference between the force sensor signal (52) and the setpoint value (60).

6. Cutterbar (4) according to one of the preceding claims 4 or 5, **characterized in that** the cutterbar (4) has an adjustably driven conveyor aid (62), the current position of which is monitored by a position sensor (64) which is connected to the evaluation electronics (36) and which transmits the position sensor value (54) to the evaluation electronics (36), and the evaluation electronics (36) has a program (38) which, with corresponding programming, determines an actuating command (44) to the adjustment drive (22) for adjusting the cutting angle (16) and/or the height control (70) of the feeder housing (10) as a function of the position sensor value (54) for the current position of the conveyor aid (62).

7. Cutterbar (4) according to one of the preceding claims 4 to 6, **characterized in that** the evaluation electronics (36) is connected to a speed sensor (66) and the evaluation electronics (36) has a program (38) which, with corresponding programming, determines the actuating command (44) as a function of the speed sensor signal transmitted by the speed sensor (66).

8. Cutterbar (4) according to one of the preceding claims 3 to 7, **characterized in that** the evaluation electronics (36) has a program (38), which, with corresponding programming, detects an exceeding of a limit value over a time interval during the evaluation of the sensor signal (50) or the force sensor signal (52) and generates an actuating signal (56) to a height control (70) of the feeder housing (10) of the harvesting machine (2), in response to which the height control (70) raises or lowers the feeder housing (10).

9. Cutterbar (4) according to one of the preceding claims 1 to 8, **characterized in that** adjustment drives (22) are provided on opposite sides of the feeder housing (10), which adjustment drives (22) are each rotatably connected to a first side (28) of a respective rocker lever (24) which is rotatable about an axis (94), with a length-adjustable power accumulator (32) engaging rotatably on the second side (30) of each rocker lever (24), and the frame part (6) with the swing arms (12) is movable against the force of the power accumulator or power accumulators (32) via a tilting movement of the respective rocker lever (24) about the axis (26) if a lifting force acts on at least one swing arm (12), wherein the frame part (6) is also supported on opposite sides of the feeder housing (10) by a respective length-adjustable power accumulator (32).

10. Cutterbar (4) according to claim 9, **characterized in that** the evaluation electronics (36) has a program (38) with which, with corresponding programming, the adjustment drives (22) can be moved independently of one another with actuating commands (44) according to the features of one of claims 4 to 7.

11. Cutterbar (4) according to claim 9 or 10, **characterized in that** the evaluation electronics (36) has a program (38), which, with corresponding programming, detects an exceeding of a limit value over a time interval during the evaluation of the sensor signals (50) or the force sensor signals (52) on one or both sides of the feeder housing (10) and, if a limit value is exceeded over a time interval on one side of the feeder housing (10) or if there is a difference between the values of the sensor signals (50) or the force sensor signals (52) on opposite sides of the feeder housing (10), when the difference exceeds a threshold value over a time interval, generates an actuating signal (56) and transmits this to a pivoting control (68) connected to the evaluation electronics (36) for pivoting the cutterbar (4) about the longitudinal axis of the harvesting machine (2) which longitudinal axis points in the working direction, to which harvesting machine (2) the pivoting control (68) rotates the cutterbar (4) in one direction about the longitudinal axis by actuating a pivoting drive (72).

12. Cutterbar (4) according to one of the preceding claims, **characterized in that** the rocker lever or rocker levers (24) is/are arranged at the upper end or above the rear wall (74) of the cutterbar (4) and the length-adjustable power accumulator or power accumulators (32) is/are arranged on the rear side (76) of the rear wall (74) in a precisely or at least predominantly vertical orientation.

13. Cutterbar (4) according to one of the preceding claims, **characterized in that** the swing arms (12) are rigid and form a rigid structural unit with the frame part (6).

14. Cutterbar (4) according to one of the preceding claims, **characterized in that** the mounting frame (8) and/or the frame part (6) are pivotably connected on opposite sides to side frames (78) on whose longitudinal side pointing in the working direction cutting elements (14) are also arranged, the side frames (78) are each supported on the ground via a wheel (80) and the respective wheel (80) is attached to a longitudinal control arm (82) pivotably connected to the side frame (78) about an axis (84), wherein a respective longitudinal control arm (82) is adjustable in its height position via a motorized adjustment drive (86), the adjustment drive (86) is rotatably connected to a first side (90) of a rocker lever (88) which is rotatable about an axis (26) and on the second side (92) of which rocker lever (88) a length-adjustable power accumulator (32) rotatably engages, and the longitudinal control arm (82) is movable against the force of the length-adjustable power accumulator (32) via a tilting movement of the rocker lever (88).

15. Cutterbar (4) according to claim 14, **characterized in that** the length-adjustable power accumulator (32) is formed from one or more springs.

16. Cutterbar (4) according to claim 14 or 15, **characterized in that** a sensor (96) is assigned to the longitudinal control arm (82) which sensor (96) detects the current pivoting position of the longitudinal control arm (82) and/or the force acting on the longitudinal control arm (82), the sensor (96) is connected to an evaluation electronics (36) to which it transmits a sensor signal corresponding to the current pivoting position or the acting force, and the evaluation electronics (36) has a program (38) which, with corresponding programming, generates a warning signal (40) when the sensor signal is in the range of an upper or lower limit value.

17. Cutterbar (4) according to one of claims 14 to 16, **characterized in that** a sensor (96) is arranged on the longitudinal control arm (82) which sensor (96) detects the current pivoting position of the longitudinal control arm (82) and/or the force acting on the longitudinal control arm (82), the sensor (96) is connected to an evaluation electronics (36) to which it transmits a sensor signal (50) corresponding to the current pivoting position or the acting force, the evaluation electronics (36) has a program (38) which, with corresponding programming, compares the sensor signal (50) with a setpoint value (60), is connected to the motorized adjustment drive (86) and issues an actuating command (58) to the adjustment drive (86) if the sensor signal (50) deviates from the setpoint value (60) by a predetermined amount, wherein the actuating command (58) moves the adjustment drive (86) in a direction with which the pretension of the length-adjustable power accumulator (32) is increased or decreased by a tilting movement of the rocker lever (88), and/or the evaluation electronics (36) has a program (38) which, with corresponding programming, compares the sensor signal (50) with a setpoint value (60), is connected to the motorized adjustment drive (86) and issues an actuating command (58) to the adjustment drive (86) if the sensor signal deviates from the setpoint value (60) by a predetermined amount, wherein the actuating command (58) moves the adjustment drive (86) in a direction which reduces the difference between the sensor signal (50) and the setpoint value (60).

18. Cutterbar (4) according to one of the preceding claims 14 to 17, **characterized in that** the weight of the side frames (78) is at least partially held in each case by a tension spring (98), which extend transversely to the working direction, are arranged behind the rear wall (74) of the side frames (78) and are connected to the mounting frame (8), wherein the weight portion held by the tension springs (98) is variable via a pretension of the tension springs (98) which pretension is adjustable via an actuating device (100).

19. Cutterbar (4) according to one of claims 17 or 18, **characterized in that** sensors (102) are provided on the side frames (78), which sensors (102) determine a current angular position of an associated side frame (78) to the mounting frame (8) and/or to the frame part (6), the sensors (102) are connected to the evaluation electronics (36) and transmit the sensor values (50) to the evaluation electronics (36), and the evaluation electronics (36) has a program (38) which, with corresponding programming, determines an actuating command (104) to the adjustment drive (86) for adjusting the pretension of the power accumulator (32) as a function of the sensor value (50) via the current angular position of the associated side frame (78).

## Revendications

1. Mécanisme de coupe (4) destiné à être monté sur une machine de récolte (2) avec une partie de châssis (6) qui est reliée à un châssis de montage (8), qui présente des moyens de liaison pour le montage sur un canal d'alimentation (10) d'une machine de récolte (2), la partie de châssis (6) présentant des bras oscillants (12) orientés dans la direction de travail, aux extrémités avant desquels sont fixés des éléments de coupe (14) pour couper le produit récolté, un logement de la partie de châssis (6) mobile en rotation autour d'un axe (18) dans un palier de rotation (20) dans le châssis de montage (8), et un entraînement de réglage (22) motorisé relié à la partie de châssis (6) pour régler l'angle de coupe (16) des éléments de coupe (14), lors de l'actionnement duquel l'angle d'inclinaison des éléments de coupe (14) par rapport au sol se modifie, **caractérisé en ce que** l'entraînement de réglage (22) est relié de manière mobile en rotation à un premier côté (28) d'un levier basculant (24) mobile en rotation autour d'un axe (26), sur le deuxième côté (30) duquel agit de manière mobile en rotation un accumulateur de force (32) de longueur variable, et la partie de châssis (6) est mobile avec les bras oscillants (12) à l'encontre de la force de l'accumulateur de force (32) de longueur variable par l'intermédiaire d'un mouvement de basculement du levier basculant (24) autour de l'axe (26) s'étendant transversalement à la direction de travail du mécanisme de coupe (4), lorsqu'une force de soulèvement agit sur au moins un bras oscillant (12).

2. Mécanisme de coupe (4) selon la revendication 1, **caractérisé en ce que** l'accumulateur de force (32) de longueur variable est formé d'un ou de plusieurs ressorts.

3. Mécanisme de coupe (4) selon la revendication 1 ou 2, **caractérisé en ce qu'**un capteur (34) est agencé sur le mécanisme de coupe (4), qui détecte la longueur actuelle de l'accumulateur de force (32) de longueur variable ou la position de pivotement du levier basculant (24), le capteur (34) est relié à une électronique d'évaluation (36), à laquelle il transmet un signal de capteur (50) correspondant à la longueur ou à la position de pivotement, et l'électronique d'évaluation (36) présente un programme (38) qui, avec une programmation correspondante, génère un signal d'avertissement (40) lorsque le signal de capteur se trouve dans la zone d'une valeur limite supérieure ou inférieure.

4. Mécanisme de coupe (4) selon l'une quelconque des revendications 1 à 3, **caractérisé en ce qu'**un capteur (34) est agencé sur le mécanisme de coupe (4), qui détecte la longueur actuelle de l'accumulateur de force (32) de longueur variable ou la position de pivotement du levier basculant (24), le capteur (34) est relié à une électronique d'évaluation (36) à laquelle il transmet un signal de capteur (50) correspondant à la longueur ou à la position de pivotement, l'électronique d'évaluation (36) présente un programme (38) qui, avec une programmation correspondante, compare le signal de capteur (50) à une valeur de consigne (60), est relié à l'entraînement de réglage motorisé (22) et délivre une instruction de réglage (44) à l'entraînement de réglage (22) lorsque le signal de capteur (50) s'écarte de la valeur de consigne (60) d'une mesure prédéfinie, l'instruction de réglage (44) déplaçant l'entraînement de réglage (22) dans une direction avec laquelle la précontrainte de l'accumulateur de force (32) de longueur variable est augmentée ou diminuée par un mouvement de basculement du levier basculant (24), et/ou l'électronique d'évaluation (36) présentant un programme (38) qui, avec une programmation correspondante, compare le signal de capteur (50) à une valeur de consigne (60), est relié à l'entraînement de réglage motorisé (22) et délivre une instruction de réglage (44) à l'entraînement de réglage (22) lorsque le signal de capteur (50) s'écarte de la valeur de consigne (60) d'une mesure prédéfinie, l'instruction de réglage (44) déplaçant l'entraînement de réglage (22) dans une direction par laquelle la différence entre le signal de capteur (50) et la valeur de consigne (60) diminue.

5. Mécanisme de coupe (4) selon la revendication 1, **caractérisé en ce que** l'accumulateur de force (32) de longueur variable présente un ou plusieurs entraînements (46) commandés en fonction de la force, un capteur de force (48) détecte la force agissant sur la partie de châssis (6) et/ou l'accumulateur de force (32) de longueur variable et le capteur de force (48) transmet un signal de capteur de force (52) correspondant à l'électronique d'évaluation (36) reliée au capteur de force (48), l'électronique d'évaluation (36) présentant un programme (38) qui, avec une programmation correspondante, compare le signal de capteur de force (52) à une valeur de consigne (60), est relié à l'entraînement de réglage motorisé (22) et délivre une instruction de réglage (44) à l'entraînement de réglage (22) lorsque le signal de capteur de force (52) s'écarte de la valeur de consigne (60) d'une mesure prédéfinie, l'instruction de réglage (44) déplaçant l'entraînement de réglage (22) dans une direction avec laquelle la précontrainte de l'accumulateur de force (32) de longueur variable est augmentée ou diminuée par un mouvement de basculement du levier basculant (24), et/ou l'électronique d'évaluation (36) présentant un programme (38) qui, avec une programmation correspondante, compare le signal de capteur de force (52) à une valeur de consigne (60), est relié à l'entraînement de réglage motorisé (22) et délivre une instruction de réglage (44) à l'entraînement de réglage (22) lorsque le signal de capteur de force (52) s'écarte de la valeur de consigne (60) d'une mesure prédéfinie, l'instruction de réglage (44) déplaçant l'entraînement de réglage (22) dans une direction par laquelle la différence entre le signal de capteur de force (52) et la valeur de consigne (60) diminue.

6. Mécanisme de coupe (4) selon l'une quelconque des revendications 4 ou 5 précédentes, **caractérisé en ce que** le mécanisme de coupe (4) présente un auxiliaire de transport (62) entraîné réglable, dont la position actuelle est surveillée par un capteur de position (64) qui est relié à l'électronique d'évaluation (36) et qui transmet la valeur de capteur de position (54) à l'électronique d'évaluation (36), et l'électronique d'évaluation (36) présente un programme (38) qui, avec une programmation correspondante, détermine une instruction de réglage (44) à l'entraînement de réglage (22) pour le réglage de l'angle de coupe (16) et/ou de la commande de hauteur (70) du canal d'alimentation (10) en fonction de la valeur de capteur de position (54) pour la position actuelle de l'auxiliaire de transport (62).

7. Mécanisme de coupe (4) selon l'une quelconque des revendications 4 à 6 précédentes, **caractérisé en ce que** l'électronique d'évaluation (36) est reliée à un capteur de vitesse (66) et l'électronique d'évaluation (36) présente un programme (38) qui, avec une programmation correspondante, détermine l'instruction de réglage (44) en fonction du signal de capteur de vitesse transmis par le capteur de vitesse (66).

8. Mécanisme de coupe (4) selon l'une quelconque des revendications 3 à 7 précédentes, **caractérisé en ce que** l'électronique d'évaluation (36) présente un programme (38), qui, avec une programmation correspondante, détecte, lors de l'évaluation du signal de capteur (50) ou du signal de capteur de force (52), un dépassement d'une valeur limite sur un intervalle de temps et génère un signal de réglage (56) à une commande de hauteur (70) du canal d'alimentation (10) de la machine de récolte (2), à la suite duquel la commande de hauteur (70) relève ou abaisse le canal d'alimentation (10).

9. Mécanisme de coupe (4) selon l'une quelconque des revendications précédentes 1 à 8, **caractérisé en ce que** des entraînements de réglage (22) sont présents sur des côtés opposés du canal d'alimentation (10), lesquels sont respectivement reliés de manière mobile en rotation à un premier côté (28) d'un levier basculant (24) respectif mobile en rotation autour d'un axe (94), sur le deuxième côté (30) duquel agit respectivement de manière mobile en rotation un accumulateur de force (32) de longueur variable, et la partie de châssis (6) avec les bras oscillants (12) est mobile autour de l'axe (26) à l'encontre de la force du ou des accumulateurs de force (32) par l'intermédiaire d'un mouvement de basculement du levier basculant (24) respectif, lorsqu'une force de soulèvement agit sur au moins un bras oscillant (12), la partie de châssis (6) étant également soutenue sur des côtés opposés du canal d'alimentation (10) avec respectivement un accumulateur de force (32) de longueur variable.

10. Mécanisme de coupe (4) selon la revendication 9, **caractérisé en ce que** l'électronique d'évaluation (36) présente un programme (38) avec lequel, avec une programmation correspondante, les entraînements de réglage (22) peuvent être déplacés indépendamment les uns des autres avec des instructions de réglage (44) selon les caractéristiques de l'une quelconque des revendications 4 à 7.

11. Mécanisme de coupe (4) selon la revendication 9 ou 10, **caractérisé en ce que** l'électronique d'évaluation (36) présente un programme (38), qui, avec une programmation correspondante, détecte, lors de l'évaluation des signaux de capteur (50) ou des signaux de capteur de force (52), un dépassement d'une valeur limite sur un intervalle de temps d'un ou des deux côtés du canal d'alimentation (10) et, lors d'un dépassement d'une valeur limite sur un intervalle de temps d'un côté du canal d'alimentation (10) ou lors d'une différence entre les valeurs des signaux de capteur (50) ou des signaux de capteur de force (52) sur des côtés opposés du canal d'alimentation (10), qui dépasse une valeur seuil sur un intervalle de temps, génère un signal de réglage (56) et transmet celui-ci à une commande de pivotement (68) reliée à l'électronique d'évaluation (36) pour le pivotement du mécanisme de coupe (4) autour de l'axe longitudinal de la machine de récolte (2) orienté dans la direction de travail, à la suite duquel la commande de pivotement (68) fait tourner le mécanisme de coupe (4) dans une direction autour de l'axe longitudinal par l'intermédiaire de l'actionnement d'un entraînement de pivotement (72).

12. Mécanisme de coupe (4) selon l'une quelconque des revendications précédentes, **caractérisé en ce que** le ou les leviers basculants (24) sont agencés à l'extrémité supérieure ou au-dessus de la paroi arrière (74) du mécanisme de coupe (4) et le ou les accumulateurs de force (32) de longueur variable sont agencés sur le côté arrière (76) de la paroi arrière (74) dans une orientation exactement ou au moins principalement verticale.

13. Mécanisme de coupe (4) selon l'une quelconque des revendications précédentes, **caractérisé en ce que** les bras oscillants (12) sont conçus sous forme rigide et forment un ensemble rigide avec la partie de châssis (6).

14. Mécanisme de coupe (4) selon l'une quelconque des revendications précédentes, **caractérisé en ce que** le châssis de montage (8) et/ou la partie de châssis (6) sont reliés de manière mobile en pivotement sur des côtés opposés à des châssis latéraux (78), sur le côté longitudinal orienté dans la direction de travail desquels sont également agencés des éléments de coupe (14), les châssis latéraux (78) s'appuient respectivement sur le sol par l'intermédiaire d'une roue (80) et la roue respective (80) est fixée à une bielle longitudinale (82) relié de manière mobile en pivotement autour d'un axe (84) au châssis latéral (78), une bielle longitudinale (82) respective étant réglable dans sa position en hauteur par l'intermédiaire d'un entraînement de réglage (86) motorisé, l'entraînement de réglage (86) étant relié de manière mobile en rotation à un premier côté (90) d'un levier basculant (88) mobile en rotation autour d'un axe (26), sur le deuxième côté (92) duquel un accumulateur de force (32) de longueur variable agit de manière mobile en rotation, et la bielle longitudinale (82) peut être déplacée à l'encontre de la force de l'accumulateur de force (32) de longueur variable par l'intermédiaire d'un mouvement de basculement du levier basculant (88).

15. Mécanisme de coupe (4) selon la revendication 14, **caractérisé en ce que** l'accumulateur de force (32) de longueur variable est formé d'un ou de plusieurs ressorts.

16. Mécanisme de coupe (4) selon la revendication 14 ou 15, **caractérisé en ce qu'**un capteur (96) est associé à la bielle longitudinale (82), qui détecte la position de pivotement actuelle de la bielle longitudinale (82) et/ou la force agissant sur la bielle longitudinale (82), le capteur (96) est relié à une électronique d'évaluation (36), à laquelle il transmet un signal de capteur correspondant à la position de pivotement actuelle ou à la force qui agit, et l'électronique d'évaluation (36) présente un programme (38) qui, avec une programmation correspondante, génère un signal d'avertissement (40) lorsque le signal de capteur se trouve dans la zone d'une valeur limite supérieure ou inférieure.

17. Mécanisme de coupe (4) selon l'une quelconque des revendications 14 à 16, **caractérisé en ce qu'**un capteur (96) est agencé sur la bielle longitudinale (82), qui détecte la position de pivotement actuelle de la bielle longitudinale (82) et/ou la force agissant sur la bielle longitudinale (82), le capteur (96) est relié à une électronique d'évaluation (36) à laquelle il transmet un signal de capteur (50) correspondant à la position de pivotement actuelle ou à la force qui agit, l'électronique d'évaluation (36) présente un programme (38) qui, avec une programmation correspondante, compare le signal de capteur (50) à une valeur de consigne (60), est relié à l'entraînement de réglage motorisé (86) et délivre une instruction de réglage (58) à l'entraînement de réglage (86) lorsque le signal de capteur (50) s'écarte de la valeur de consigne (60) d'une mesure prédéfinie, l'instruction de réglage (58) déplaçant l'entraînement de réglage (86) dans une direction avec laquelle la précontrainte de l'accumulateur de force (32) de longueur variable est augmentée ou diminuée par un mouvement de basculement du levier basculant (88), et/ou l'électronique d'évaluation (36) présentant un programme (38) qui, avec une programmation correspondante, compare le signal de capteur (50) à une valeur de consigne (60), est relié à l'entraînement de réglage motorisé (86) et délivre une instruction de réglage (58) à l'entraînement de réglage (86) lorsque le signal de capteur s'écarte de la valeur de consigne (60) d'une mesure prédéfinie, l'instruction de réglage (58) déplaçant l'entraînement de réglage (86) dans une direction par laquelle la différence entre le signal de capteur (50) et la valeur de consigne (60) diminue.

18. Mécanisme de coupe (4) selon l'une quelconque des revendications 14 à 17 précédentes, **caractérisé en ce que** le poids des châssis latéraux (78) est maintenu au moins en partie respectivement par un ressort de tension (98) qui s'étend transversalement à la direction de travail, est agencé derrière la paroi arrière (74) des châssis latéraux (78) et est relié au châssis de montage (8), la part de poids maintenue par les ressorts de tension (98) pouvant être modifiée par l'intermédiaire d'une précontrainte des ressorts de tension (98) réglable avec un dispositif de réglage (100).

19. Mécanisme de coupe (4) selon l'une quelconque des revendications 17 ou 18, **caractérisé en ce que** des capteurs (102) sont présents sur les châssis latéraux (78), lesquels déterminent une position angulaire actuelle d'un châssis latéral (78) associé par rapport au châssis de montage (8) et/ou à la partie de châssis (6), les capteurs (102) sont reliés à l'électronique d'évaluation (36) et transmettent les valeurs de capteur (50) à l'électronique d'évaluation (36), et l'électronique d'évaluation (36) présente un programme (38) qui, avec une programmation correspondante, détermine une instruction de réglage (104) à un entraînement de réglage (86) pour le réglage de la précontrainte de l'accumulateur de force (32) en fonction de la valeur de capteur (50) par l'intermédiaire de la position angulaire actuelle du châssis latéral (78) associé.
